# EUROPEAN PATENT APPLICATION

(11) **EP 4 804 314 A1**
(43) Date of publication of application: **09.09.2026**
(21) Application number: 25732669.4
(22) Date of filing: 23.01.2025
(51) Int. Cl.: H01M 50/282, H01M 10/6557, H01M 10/613, H01M 50/358, H01M 50/342, H01M 50/367, H01M 50/383, H01M 50/392

(54) **BATTERY DEVICE AND ELECTRIC DEVICE**

(71) Applicant: Contemporary Amperex Technology (Hong Kong) Limited, Central, Hong Kong (HK)
(72) Inventor: ZHENG, Linxin, Ningde, Fujian 352100 (CN); LI, Yao, Ningde, Fujian 352100 (CN); QIAN, Ou, Ningde, Fujian 352100 (CN); WANG, Shihan, Ningde, Fujian 352100 (CN); XIE, Jiuhua, Ningde, Fujian 352100 (CN)
(74) Representative: Gong, Jinping
(86) International application number: PCT/CN2025/074334
(87) International publication number: WO 2026/156600

(57) **Abstract**

Disclosed are a battery apparatus and an electric device. The battery apparatus includes a case and a battery module, and the case has an accommodating cavity and a discharge cavity. The discharge cavity is provided around an outer peripheral side of the accommodating cavity, and the discharge cavity is in communication with the accommodating cavity via a communication hole. The battery module is disposed within the accommodating cavity, and includes a housing and a plurality of pouch battery cells accommodated in the housing. The housing has a weak part configured to release internal pressure of the pouch battery cells.

## Description

### TECHNICAL FIELD

The present application relates to the technical field of batteries, and in particular, to a battery apparatus and an electric device.

### BACKGROUND

In recent years, new energy vehicles have developed by leaps and bounds, and battery apparatuses, as the power source of electric vehicles, play an irreplaceable and important role. A battery apparatus utilizes battery cells to store and supply electrical energy, among which pouch battery cells have been widely adopted due to their unique structure and advantages.

However, in the related art, the reliability of battery apparatuses incorporating pouch battery cells still requires further improvement.

### SUMMARY

Provided in the embodiments of the present application are a battery apparatus and an electric device, which enable the release of internal pressure of pouch battery cells and slow down thermal propagation, thereby enhancing the reliability of the battery apparatus, while also maintaining the energy density of the battery apparatus to a certain extent.

In a first aspect, provided in the embodiments of the present application is a battery apparatus, including: a case having an accommodating cavity and a discharge cavity, where the discharge cavity is provided around an outer peripheral side of the accommodating cavity, and the discharge cavity is in communication with the accommodating cavity via a communication hole; a battery module disposed within the accommodating cavity, the battery module including a housing and a plurality of pouch battery cells accommodated in the housing, where the housing has a weak part configured to release internal pressure of the pouch battery cells.

In the above technical solution, the accommodating cavity is in communication with the discharge cavity via the communication hole to allow the discharge of emissions during pressure relief of the pouch battery cells into the discharge cavity, such that the internal pressure of the pouch battery cells is released and, to a certain extent, the temperature of the pouch battery cells can also be reduced. Additionally, to a certain extent, the emissions entering the discharge cavity can be separated from the pouch battery cells in the accommodating cavity, which slows down thermal propagation of the battery apparatus and enhances the reliability of the battery apparatus. Furthermore, since the discharge cavity does not occupy the space allocated for the pouch battery cells in the accommodating cavity, the battery apparatus can maintain a good energy density while featuring a simple configuration that is easy to implement.

In some embodiments, the housing has a U-shaped mounting cavity, the U-shaped mounting cavity has a first open side and a closed side disposed opposite to each other, and the closed side is provided with the weak part; and/or the U-shaped mounting cavity has a second open side and a third open side disposed opposite to each other, the second open side and the third open side are each provided with the weak part, and tabs of the pouch battery cells extend out of the housing through the corresponding weak parts.

In the above technical solution, for the structure where the housing defines the U-shaped mounting cavity, the positioning of the weak part is relatively flexible and an appropriate position can be selected based on different requirements to better meet practical applications. Additionally, appropriate weak structures can be selected based on different positions of the weak part, thereby ensuring good compatibility between the weak structure and its mounting position. It can be understood that when both the second open side and third open side are provided with the weak part, the weak part may be formed as a relief opening or an opening, which simplifies the structure of the weak parts and facilitates processing.

In some embodiments, the weak part is configured as a pressure relief hole; or, the weak part is configured as a score; or, the weak part is configured as a weakened part. In the above technical solution, more options may be provided for the design of the weak part so as to meet different use requirements.

In some embodiments, when the volumetric energy density ρ of the pouch battery cell is not less than 390 Wh/L, the aperture area S of the communication hole is not less than 100 cm², and the number n of the communication holes is not less than 8; when the volumetric energy density ρ of the pouch battery cell is less than 390 Wh/L, the aperture area S of the communication hole is less than 100 cm² but not less than 55 cm², and the number n of the communication holes is less than 8 but not less than 4.

In the above technical solution, the aperture area of the communication hole and the number of the communication holes may be configured based on the volumetric energy density of the pouch battery cell, ensuring that the aperture area of the communication hole and the number of the communication holes are well matched to the volumetric energy density of the pouch battery cell. This configuration allows the communication hole to meet the pressure relief requirements of the pouch battery cell while also maintaining the structural strength of the case, preventing excessive weakening of the case.

In some embodiments, the battery apparatus further includes: a first protective member disposed in the discharge cavity, where the first protective member is arranged opposite to and spaced apart from the communication hole, and the first protective member has higher high-temperature resistance than the case.

In the above technical solution, the arrangement of the first protective member does not obstruct the communication between the accommodating cavity and the discharge cavity via the communication hole, such that the pressure relief of the pouch battery cell remains unaffected. Furthermore, since the first protective member is positioned opposite to the communication hole and possesses excellent high-temperature resistance, at least a part of the emissions discharged from the accommodating cavity into the discharge cavity via the communication hole will directly impact the first protective member. The first protective member can separate the emissions (such as in the case of thermal failure of the pouch battery cell, high-temperature and high-pressure gases, and even gases and electrolytic solutions with sparks and flames generated inside the pouch battery cell) from the inner wall of the discharge cavity, thereby providing a protective effect. This configuration reduces potential damage to the case caused by the impact from the high-temperature and high-pressure emissions, thus enhancing the structural strength and reliability of the case.

In some embodiments, a plurality of communication holes are provided and spaced apart from each other in a surrounding direction of the discharge cavity, and each of the communication holes corresponds to one respective first protective member. In the above technical solution, the arrangement of the plurality of communication holes is relatively dispersed, facilitating adaptability to the condition where the pouch battery cells at different positions undergo thermal runaway. This configuration ensures that at least one of the plurality of communication holes can provide an appropriate discharge path corresponding to the length of the pouch battery cell undergoing thermal runaway, thereby balancing discharge smoothness and discharge resistance. Additionally, since each communication hole corresponds to one respective first protective member, regardless of which communication hole is used for discharging the emissions into the discharge cavity, the respective first protective member can protect the case, thereby improving the reliability of the case.

In some embodiments, on a preset plane, an orthographic projection of a wall of the communication hole is located within an orthographic projection range of the first protective member, and the preset plane is perpendicular to an axial direction of the communication hole. In the above technical solution, on the preset plane, the coverage area of the first protective member is greater than or equal to the aperture area of the communication hole, such that the protective area of the first protective member can be increased. This configuration facilitates directing at least the majority of the emissions ejected from the communication hole directly towards the first protective member rather than towards the inner wall of the discharge cavity, thereby improving the protective effect of the first protective member on the case and further reducing the impact of the emissions on the case.

In some embodiments, on the preset plane, a minimum distance x between the orthographic projection of the wall of the communication hole and an outer contour of the orthographic projection of the first protective member is not less than 5 mm. In the above technical solution, on the preset plane, by configuring the minimum distance x between the orthographic projection of the wall of the communication hole and the outer contour of the orthographic projection of the first protective member to be not less than 5 mm, the difference between the coverage area of the first protective member and the aperture area of the communication hole is further increased, and the protective area of the first protective member is further increased. This configuration facilitates directing all the emissions ejected from the communication hole directly towards the first protective member rather than towards the inner wall of the discharge cavity, thereby improving the protective effect on the case.

In some embodiments, the first protective member is integrated into the case; or, the first protective member is fixedly disposed on the inner wall of the discharge cavity. In the above technical solution, the arrangement of the first protective member is flexible, allowing for different connection methods between the first protective member and the case based on various requirements, thereby better satisfying actual needs.

In some embodiments, the first protective member includes a plurality of protective layers arranged sequentially in the axial direction of the communication hole, the plurality of protective layers are made of different materials, and in any two adjacent protective layers, the protective layer proximal to the communication hole has higher high-temperature resistance than the protective layer distal to the communication hole. In the above technical solution, in the two adjacent protective layers, the protective layer proximal to the communication hole is positioned closer to the emissions and configured to primarily withstand high-temperature jet impact from the emissions. Therefore, in the solution described above, the high-temperature resistance of the protective layer proximal to the communication hole is configured to be superior to that of the protective layer distal to the communication hole. This configuration ensures reliable endurance against the high-temperature jet impact while appropriately reducing the high-temperature resistance requirements for the protective layer distal to the communication hole, thereby contributing to an appropriate reduction in the material cost of the first protective member.

In some embodiments, the first protective member is a ceramic composite member, a mica member, a glass fiber member, or a coating provided on the inner wall of the discharge cavity. In the above technical solution, these materials exhibit excellent high-temperature resistance, enabling them to withstand the impact of the emissions ejected from the communication hole when the pouch battery cell releases internal pressure. Additionally, these materials possess favorable processing properties, facilitating reliable placement within the discharge cavity.

In some embodiments, the first protective member is formed in a plate structure, and the first protective member has a thickness t, where 0.3 mm ≤ t ≤ 3 mm. In the above technical solution, by configuring the first protective member as a plate structure, the structure of the first protective member is simplified, thereby facilitating processing. Meanwhile, the reasonable thickness of the first protective member ensures a balance between its reliability and protective effect on the case, while avoiding the occupation of excessive space within the discharge cavity.

In some embodiments, two ends of the housing in a first horizontal direction are each provided with the weak part, a storage groove is formed at the bottom of the housing corresponding to an end of the housing where the weak part is located, and a bottom wall of the storage groove is positioned lower than the pouch battery cell. In the above technical solution, when thermal runaway occurs in the pouch battery cell, the weak part can intercept liquid, particles, and the like in the emissions, and the intercepted liquid, particles, and the like subsequently flow downward into the storage groove for containment. The intercepted emissions in the housing can be separated from the pouch battery cell, such that the emissions are not prone to contact the pouch battery cell and then puncture the packaging of the pouch battery cell, resulting in insulation failure of the pouch battery cell. Therefore, the insulation reliability of the battery apparatus during thermal runaway pressure relief is improved.

In some embodiments, the pouch battery cell is positioned higher than the notch of the storage groove. In the above technical solution, since the pouch battery cell is positioned higher than the notch of the storage groove, the distance between the emissions in the storage groove and the pouch battery cell is increased. This configuration further enhances the capability of the storage groove to separate the emissions therein and the pouch battery cell, reducing the possibility of contact between the emissions within the storage groove and the pouch battery cell, thereby further improving the insulation reliability of the battery apparatus during thermal runaway pressure relief.

In some embodiments, the bottom of the housing is provided with an opening, the bottom of the accommodating cavity is provided with a support protrusion in a protruding manner, the support protrusion is supported by the pouch battery cell and is fixed to the pouch battery cell by adhesive bonding, the housing is provided with an accommodating groove having a downward-facing notch between any two storage grooves, the opening is formed on a top wall of the accommodating groove, and at least a part of the support protrusion is accommodated in the accommodating groove and abuts against the groove wall of the accommodating groove. In the above technical solution, through the arrangement of the support protrusion and the accommodating groove, the groove wall of the storage groove can fit the support protrusion to achieve a supporting effect of the support protrusion on the groove wall of the storage groove. This configuration enhances the structural stability of the storage groove. Meanwhile, the arrangement of the storage groove enhances the structural strength of the bottom of the housing. In combination with the arrangement of the support protrusion, the structural stability of the opening is improved, thereby enhancing the stability of the battery module.

In some embodiments, the battery apparatus further includes: a pressure relief structure, disposed on one side of the case in a second horizontal direction or on the bottom side of the case, where the pressure relief structure is in corresponding communication with the discharge cavity, and the pressure relief structure is spaced apart from the communication hole in the surrounding direction of the discharge cavity. In the above technical solution, by providing the pressure relief structure in corresponding communication with the discharge cavity, the internal pressure of the discharge cavity can be released, allowing the emissions discharged during thermal runaway of the pouch battery cell to be discharged from the battery apparatus through the pressure relief structure, thereby slowing down thermal propagation. Moreover, since the pressure relief structure is spaced apart from the communication hole in the surrounding direction of the discharge cavity, the emissions at the communication hole have to flow through a certain path within the discharge cavity before reaching the pressure relief structure. This configuration facilitates smooth discharge while maintaining a certain level of exhaust resistance, thereby mitigating the risk of fire caused by overly smooth discharge.

In some embodiments, a distance y between the pressure relief structure and the communication hole in the surrounding direction of the discharge cavity is not less than 10 cm. In the above technical solution, by configuring the distance y between the pressure relief structure and the communication hole in the surrounding direction of the discharge cavity to be not less than 10 cm, the emissions at the communication hole have to flow through a path of at least 10 cm within the discharge cavity before reaching the pressure relief structure. This configuration facilitates smooth discharge while maintaining a certain level of exhaust resistance, further mitigating the risk of fire caused by overly smooth discharge.

In some embodiments, the discharge cavity includes a first discharge section and a second discharge section which are communicatively connected in a bent configuration, the second discharge section is in communication with the communication hole via the first discharge section, and the pressure relief structure is disposed on the second discharge section. In the above technical solution, the communication hole is disposed on the first discharge section, the pressure relief structure is disposed on the second discharge section, and the first discharge section and the second discharge section are communicatively connected in a bent configuration, such that the emissions at the communication hole have to flow through a certain path within the discharge cavity before reaching the pressure relief structure, and the emissions at the communication hole have to change direction within the discharge cavity before reaching the pressure relief structure. This configuration facilitates smooth discharge while maintaining a certain level of exhaust resistance, thereby mitigating the risk of fire caused by overly smooth discharge.

In some embodiments, when the volumetric energy density ρ of the pouch battery cell is not less than 390 Wh/L, a plurality of pressure relief structures are provided; when the volumetric energy density ρ of the pouch battery cell is less than 390 Wh/L, one pressure relief structure is provided. In the above technical solution, the number of the pressure relief structure may be configured based on the volumetric energy density of the pouch battery cell, ensuring that the number of the pressure relief structure is well matched to the volumetric energy density of the pouch battery cell. This configuration allows the communication hole to meet the pressure relief requirements of the pouch battery cell while also maintaining the structural strength of the case, preventing excessive weakening of the case.

In some embodiments, the case includes a top plate, a bottom plate, and a frame, the frame is arranged around the bottom plate and defines, with the bottom plate and the top plate, the accommodating cavity, the discharge cavity is formed within the frame, and the communication hole is formed on an inner peripheral wall of the frame. In the above technical solution, since the case is configured to include the top plate, the bottom plate, and the frame, the frame, the top plate, and the bottom plate define the accommodating cavity, and the discharge cavity is formed within the frame, the processing and molding of both the accommodating cavity and the discharge cavity are facilitated. This configuration allows the discharge cavity to be arranged around the accommodating cavity and facilitates the assembly of the case. It can be understood that the present application does not specifically limit the connection method between the frame and the top plate or between the frame and the bottom plate.

In some embodiments, the frame includes a plurality of edge beams sequentially connected end to end, and at least a part of the plurality of edge beams are each configured as a hollow structure to define the discharge cavity. In the above technical solution, since the frame is configured to include the plurality of edge beams, the edge beam participates in defining the discharge cavity, the structure of the frame is simplified, facilitating the processing and molding of the discharge cavity. Meanwhile, the arrangement of the plurality of edge beams allows for flexible configuration of the peripheral length of the discharge cavity.

In some embodiments, the discharge cavity includes the first discharge section and the second discharge section which are communicatively connected in a bent configuration, the plurality of edge beams include two first edge beams disposed opposite to each other in the first horizontal direction and two second edge beams disposed opposite to each other in a third horizontal direction, each of the first edge beams is configured as a hollow structure to define the first discharge section, each of the second edge beams is configured as a hollow structure to define the second discharge section, and the plurality of communication holes are formed on an inner wall of each of the first edge beams. In the above technical solution, the first discharge section and the second discharge section are communicatively connected in a bent configuration, and the second discharge section can be in communication with the communication hole via the first discharge section. This configuration ensures smooth discharge of the emissions while providing a certain degree of discharge resistance appropriately, thereby mitigating the risk of fire caused by overly smooth discharge. Additionally, the structure of the frame is simple and easy to process.

In some embodiments, the top of the housing is provided with the pressure relief structure, and the battery apparatus further includes: a second protective member, disposed between the top plate and the battery module to separate the pressure relief structure from the top plate.

In the above technical solution, the arrangement of the second protective member does not affect the normal pressure relief function of the pressure relief structure, and at least a part of the emissions discharged toward the pressure relief structure directly impact the second protective member. The second protective member can separate the emissions from the pressure relief structure to provide a protective effect, such that potential damage to the pressure relief structure caused by the impact from the high-temperature and high-pressure emissions is reduced, thereby improving the reliability of pressure relief and enhancing the reliability of the battery apparatus.

In some embodiments, the battery module includes a plurality of battery modules, the battery apparatus further includes at least one of a first heat exchange member and a second heat exchange member, and the at least one of the first heat exchange member and the second heat exchange member is configured for heat exchange with the pouch battery cell. The first heat exchange member is disposed between two adjacent modules of the battery module, and the second heat exchange member is disposed between the battery module and the case.

In some embodiments, the pouch battery cell is any one of a lithium iron phosphate battery cell, a ternary battery cell, and a solid-state battery cell. In the above technical solution, when the aforementioned types of batteries are used as the pouch battery cell, more options may be provided for the design of the battery apparatus so as to meet different use requirements. Specifically, when the pouch battery cell is the lithium iron phosphate battery cell, it offers advantages of high reliability, long cycle life, light weight, high capacity, and low internal resistance. When the pouch battery cell is the ternary battery cell, it offers advantages of high energy density and excellent electrochemical performance. When the pouch battery cell is the solid-state battery cell, it offers advantages of high energy density, high reliability, light weight, and good performance at both high and low temperatures.

In some embodiments, the pouch battery cell is the lithium iron phosphate battery cell, and in a positive electrode material of the pouch battery cell, an amount ratio of a positive electrode active material, a binder, and a conductive agent is 96:(1-3):(1-3); the pouch battery cell is the ternary battery cell, and in a positive electrode material of the pouch battery cell, an amount ratio of a positive electrode active material, a binder, and a conductive agent is 96:(2-3):(1-2).

In the above technical solution, when the pouch battery cell is the lithium iron phosphate battery cell, the high proportion of positive electrode active material means that a greater amount of electrochemically reactive material can be accommodated within the limited electrode assembly, thereby increasing the capacity and energy density of the battery apparatus. Therefore, the lithium iron phosphate battery cell can output a higher amount of electricity while maintaining relatively small volume and weight, making it suitable for application scenarios requiring a certain level of energy density. When the amounts of the binder and the conductive agent are within the aforementioned ranges, the cost of auxiliary materials can be reduced, thereby lowering the overall cost of the battery apparatus. When the pouch battery cell is the ternary battery cell, due to relatively complex structure and surface properties of the ternary material, the adoption of the aforementioned ratio of the positive electrode active material, the binder, and the conductive agent ensures the firm bonding between the positive electrode active material particles and between the active material and the current collector. Therefore, this configuration improves the mechanical stability and structural integrity of the electrode assembly, and reduces the risk of active material detachment and electrode pulverization during the charging and discharging processes, thereby extending the cycle life of the battery apparatus.

In a second aspect, provided in the embodiments of the present application is an electric device. The electric device includes the above battery apparatus.

In the above technical solutions, since the battery apparatus has relatively high reliability, the power utilization reliability of the electric device can be improved by adopting the battery apparatus.

### BRIEF DESCRIPTION OF THE DRAWINGS

The above and/or additional aspects and advantages of the present application will become apparent and readily understood from the description of embodiments in conjunction with the accompanying drawings below, in which:
FIG. 1 is a schematic structural diagram of a vehicle as an electric device according to some embodiments of the present application;
FIG. 2 is an exploded view of the structure of a battery apparatus according to some embodiments of the present application;
FIG. 3 is an exploded view of the structure of a battery apparatus according to another embodiment of the present application;
FIG. 4 is a schematic diagram of the battery module shown in FIG. 3;
FIG. 5 is a schematic diagram of a battery apparatus according to some embodiments of the present application;
FIG. 6 is another schematic diagram of the battery apparatus shown in FIG. 5;
FIG. 7 is a schematic diagram of a battery apparatus according to still some embodiments of the present application;
FIG. 8 is a result curve diagram of pressure relief tests performed on three different exemplary battery apparatuses, respectively;
FIG. 9 is a result curve diagram of pressure relief tests performed on three different exemplary battery apparatuses, respectively;
FIG. 10 is a result curve diagram of pressure relief tests performed on three different exemplary battery apparatuses, respectively.

### Reference numerals:

electric device 1000, battery apparatus 100, controller 200, motor 300,
case 1, accommodating cavity 1a, discharge cavity 1b, communication hole 1c, support protrusion 1d, first discharge section 1e, second discharge section 1f, first case body 11, second case body 12, top plate 13, bottom plate 14, frame 15, edge beam 151, first edge beam 1511, second edge beam 1512, battery module 2, battery cell 20, housing 21, weak part 210, U-shaped mounting cavity 21a, first open side 21b, closed side 21c, second open side 21d, third open side 21e, opening 21f, storage groove 21g, accommodating groove 21h, first housing wall 211, second housing wall 212, third housing wall 213, first housing part 214, second housing part 215, third housing part 216, flange part 217, pouch battery cell 22, first protective member 3, and pressure relief structure 4.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is obvious that the described embodiments are some, but not all, embodiments of the present application. Based on the embodiments in the present application, all other embodiments obtained by those of ordinary skill in the art without creative work shall fall within the protection scope of the present application.

Unless otherwise defined, all technical and scientific terms used in the present application have the same meaning as commonly understood by those of ordinary skill in the art to which the present application belongs. The terms used in the specification of the present application are only used to describe specific embodiments and are not intended to limit the present application. The terms "include", "comprise", "have", and any variants thereof in the specification and claims of the present application and the above description of the drawings are intended to cover non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "link", "connect", and "attach" shall be construed broadly and may be, for example, fixed connection, detachable connection, or integrated connection, or direct connection, indirect connection via an intermediate, or internal communication between two elements. For those of ordinary skill in the art, the specific meanings of the aforementioned terms in the present application can be understood according to specific conditions.

In the present application, the term "and/or" is only an association relationship that describes the associated objects, and indicates that there may be three relationships. For example, A and/or B may indicate that: only A is present, both A and B are present, and only B is present. In addition, the character "/" herein generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings are only exemplary and should not impose any limitation on the present application. The term "plurality of" used in the present application refers to more than two (including two).

In the present application, the battery cell may include a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. This is not limited in the embodiments of the present application. The battery cell may be cylindrical, flat, rectangular parallelepiped-shaped, or in other shapes, which is also not limited in the embodiments of the present application.

The battery apparatus described in the embodiments of the present application may refer to a battery apparatus including one or more battery cell assemblies for providing voltage and capacity. A battery cell assembly may include a plurality of battery cells connected in series, in parallel, or in series-parallel by a busbar component. In some embodiments, the battery cell assembly is typically formed by arranging a plurality of battery cells.

As an example, the battery cell assembly may be a battery module, and the battery module is an independent module formed by arranging and fixing a plurality of battery cells. As an example, the battery module may be formed by binding a plurality of battery cells via a binding belt.

In some embodiments, the battery apparatus may be a battery pack. The battery pack includes a case and one or more battery cell assemblies, and the battery cell assemblies are accommodated in the case. As an example, the battery cell assembly may be a battery module, and the battery cell assembly may be accommodated in the case by fixing the battery module in the case. As an example, the battery cell assembly may also be accommodated in the case by directly fixing a plurality of battery cells in the case. The case can prevent liquid or other foreign matters from affecting the charging or discharging of the battery cells.

The battery cell includes a housing, an electrode assembly, and an electrolyte. The housing is configured to accommodate the electrode assembly and the electrolyte. In the present application, the battery cell may be a pouch battery cell, and the pouch battery cell may refer to a battery cell that uses a soft outer packaging material as the housing. The electrode assembly consists of a positive electrode plate, a negative electrode plate, and a separation film. A battery cell primarily works by the movement of metal ions between the positive electrode plate and the negative electrode plate. The positive electrode plate includes a positive electrode current collector and a positive electrode active substance layer. The surface of the positive electrode current collector is coated with the positive electrode active substance layer. The positive electrode current collector not coated with the positive electrode active substance layer protrudes from the positive electrode current collector coated with the positive electrode active substance layer. The positive electrode current collector not coated with the positive electrode active substance layer serves as a positive electrode tab. Taking lithium-ion batteries as an example, the material of the positive electrode current collector may be aluminum, and the positive electrode active substance may be lithium cobaltate, lithium iron phosphate, ternary lithium, or lithium manganate, etc. The negative electrode plate includes a negative electrode current collector and a negative electrode active substance layer. The surface of the negative electrode current collector is coated with the negative electrode active substance layer. The negative electrode current collector not coated with the negative electrode active substance layer protrudes from the negative electrode current collector coated with the negative electrode active substance layer. The negative electrode current collector not coated with the negative electrode active substance layer serves as a negative electrode tab. The material of the negative electrode current collector may be copper, and the negative electrode active substance may be carbon or silicon. To ensure the passing of a large current without fusing, there are a plurality of positive electrode tabs that are stacked together, and there are a plurality of negative electrode tabs that are stacked together.

The material of the separation film may be polypropylene (PP), polyethylene (PE), or the like. In addition, the electrode assembly may be of a winding structure or a stacking structure, but the embodiments of the present application are not limited thereto.

In recent years, new energy vehicles have developed by leaps and bounds, and battery apparatuses, as the power source of electric vehicles, play an irreplaceable and important role. A battery apparatus utilizes battery cells to store and supply electrical energy, and among various types of battery cells, pouch battery cells have been widely adopted due to their unique structure and advantages.

In the related art, in a typical battery apparatus, a plurality of pouch battery cells are generally mounted side by side during production and assembly. When thermal runaway occurs in a pouch battery cell, it is difficult to achieve timely pressure relief of the pouch battery cell, making the battery apparatus prone to rapid thermal propagation and challenging to balance the energy density of the battery apparatus.

Based on the above considerations, a battery apparatus is provided. The battery apparatus includes a case and a battery module, and the case has an accommodating cavity and a discharge cavity. The discharge cavity is provided around an outer peripheral side of the accommodating cavity, and the discharge cavity is in communication with the accommodating cavity via a communication hole. The battery module is disposed within the accommodating cavity, and includes a housing and a plurality of pouch battery cells accommodated in the housing. The housing has a weak part configured to release internal pressure of the pouch battery cells.

In the above technical solution, the accommodating cavity is in communication with the discharge cavity via the communication hole to allow the discharge of emissions during pressure relief of the pouch battery cells into the discharge cavity, such that the internal pressure of the pouch battery cells is released and, to a certain extent, the temperature of the pouch battery cells can also be reduced. Additionally, to a certain extent, the emissions entering the discharge cavity can be separated from the pouch battery cells in the accommodating cavity, which slows down thermal propagation of the battery apparatus and enhances the reliability of the battery apparatus. Furthermore, since the discharge cavity does not occupy the space allocated for the pouch battery cells in the accommodating cavity, the battery apparatus can maintain a good energy density while featuring a simple configuration that is easy to implement.

The battery apparatus disclosed in the embodiments of the present application can be used in, but is not limited to be used in, electric devices such as vehicles, ships, or aircraft. The power system of the electric device may be composed of the battery apparatus disclosed in the present application, and the like.

The embodiments of the present application provide an electric device using a battery apparatus as a power source. The electric device may be, but is not limited to, a mobile phone, a tablet, a laptop computer, an electric toy, an electric tool, an electric bicycle, an electric vehicle, a ship, a spacecraft, or the like. The electric toy may include a stationary or mobile electric toy, such as a game console, an electric car toy, an electric ship toy, and an electric airplane toy, and the spacecraft may include an airplane, a rocket, a space shuttle, a spaceship, and the like.

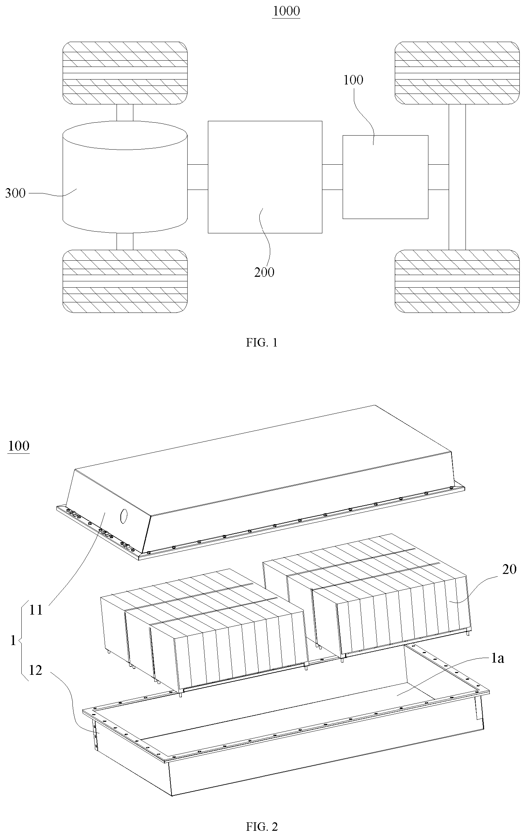

For the convenience of description, an embodiment of the present application in which a vehicle is taken as the example of the electric device 1000 is used for description. Referring to FIG. 1, FIG. 1 is a schematic structural diagram of a vehicle as an electric device 1000 according to some embodiments of the present application. The vehicle may be a fuel vehicle, a gas vehicle, or a new energy vehicle. The new energy vehicle may be a pure electric vehicle, a hybrid vehicle, an extended-range vehicle, or the like. A battery apparatus 100 is arranged inside the vehicle, and the battery apparatus 100 may be arranged at the bottom, head, or tail of the vehicle. The battery apparatus 100 may be used for powering the vehicle. For example, the battery apparatus 100 may serve as an operation power source for the vehicle. The vehicle may further include a controller 200 and a motor 300. The controller 200 is configured to control the battery apparatus 100 to power the motor 300, e.g., for operation power needed by the vehicle for start-up, navigation, and driving.

In some embodiments of the present application, the battery apparatus 100 may not only serve as the operation power source for the vehicle, but also as a driving power source for the vehicle to, instead of or in part instead of fuel or natural gas, provide driving power for the vehicle.

Referring to FIG. 2, FIG. 2 is an exploded view of the structure of a battery apparatus 100 according to some embodiments of the present application. The battery apparatus 100 includes a case 10 and a plurality of battery cells 20. The battery cells 20 are configured to be accommodated in the case 10. The case 10 is configured to provide an assembly space for the battery cell 20, and the case 10 may be in various structures. In some embodiments, the case 10 may include a first case body 11 and a second case body 12. The first case body 11 and the second case body 12 are mutually lidded onto each other. The first case body 11 and the second case body 12 jointly define an assembly space for accommodating the battery cells 20. The second case body 12 may be of a hollow structure with one end open, and the first case body 11 may be of a plate-shaped structure. The first case body 11 is lidded onto the open side of the second case body 12, such that the first case body 11 and the second case body 12 jointly define an assembly space; the first case body 11 and the second case body 12 may also both be of a hollow structure with one side open, and the open side of the first case body 11 is lidded onto the open side of the second case body 12. Certainly, the case 10 formed by the first case body 11 and the second case body 12 may be in various shapes, such as a cylinder and a rectangular parallelepiped.

In the battery apparatus 100, the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case 10. Certainly, it may be that in the battery apparatus 100, the plurality of battery cells 20 are first connected in series, in parallel, or in series-parallel to form battery modules, and then the plurality of battery cell modules are connected in series, in parallel, or in series-parallel to form a whole and accommodated in the case 10. The battery apparatus 100 may further include other structures. For example, the battery apparatus 100 may further include a busbar component for achieving electrical connection between the plurality of battery cells 20.

Referring to FIG. 2, FIG. 2 is an exploded view of the structure of a battery apparatus 100 according to some embodiments of the present application. The battery apparatus 100 includes a plurality of rows of battery cells 20, the plurality of rows of battery cells 20 are arranged in the length direction of the case 10, and each row of battery cells 20 includes a plurality of battery cells 20 arranged in the width direction of the case 10; alternatively, a plurality of rows of the battery cells 20 are arranged in the width direction of the case 10, and each row of the battery cells 20 includes a plurality of battery cells 20 arranged in the length direction of the case 10.

Each of the battery cells 20 may be a secondary battery or a primary battery, where the secondary battery refers to a battery cell 20 that can continue to be used by reactivating the active material through charging after the battery cell is discharged, and may also be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like. This is not limited in the embodiments of the present application. The battery cell 20 may be cylindrical, flat, rectangular parallelepiped-shaped, or in other shapes. Illustratively, in FIG. 2, the battery cell 20 is in the shape of a rectangular parallelepiped.

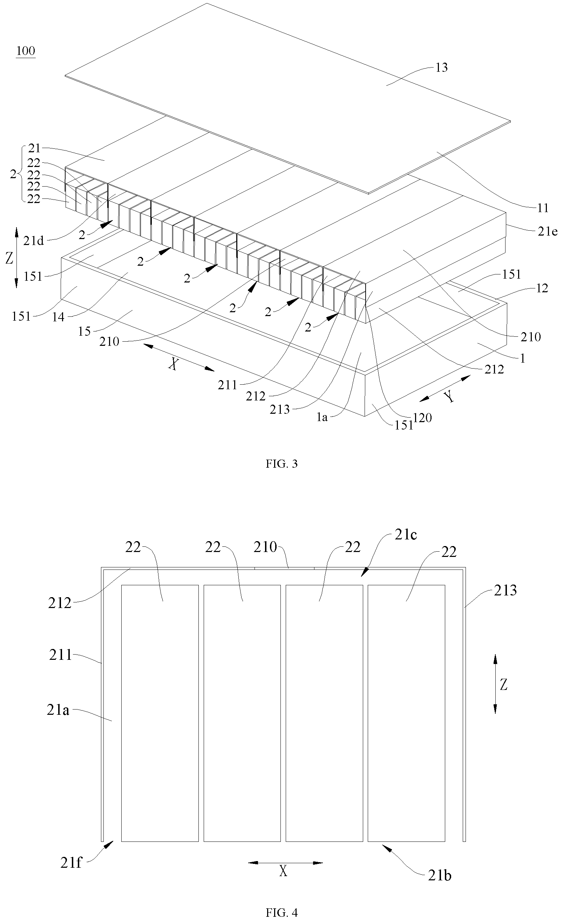

For example, as shown in FIG. 3, the battery cell 20 is substantially rectangular parallelepiped-shaped, and the height direction of the battery cell 20 is a third direction Z, the length direction of the battery cell 20 is a second direction Y, and the thickness direction of the battery cell is a first direction X. The first direction X, the second direction Y, and the third direction Z are perpendicular to each other, which is, however, not limiting. In other embodiments of the present application, the battery cell 20 may also be multi-prismatic, flat, or in other shapes.

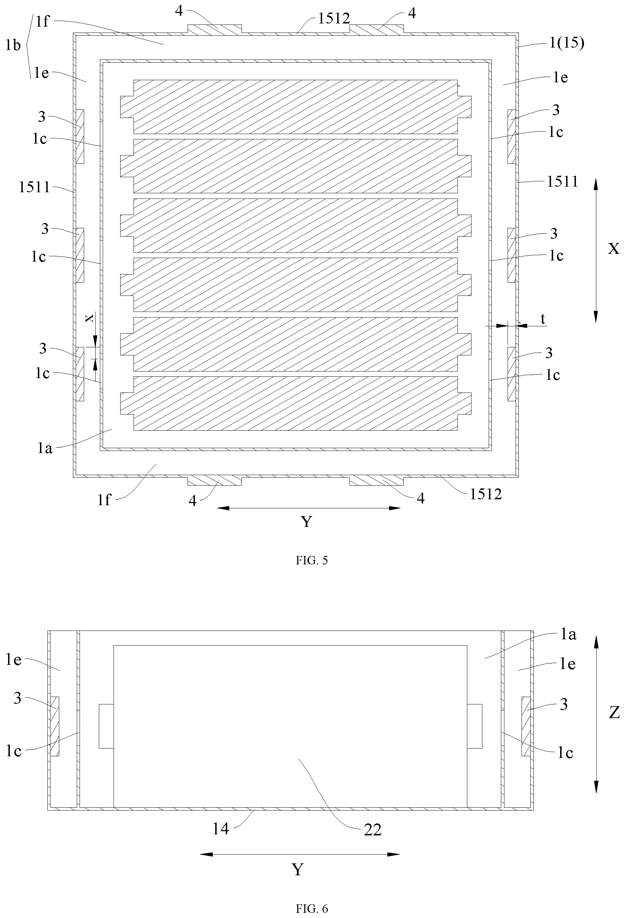

Referring to FIGs. 3 and 5, in the embodiments of the present application, the battery apparatus 100 includes a case 1 and battery modules 2.

The case 1 has an accommodating cavity 1a and a discharge cavity 1b, the battery modules 2 are disposed in the accommodating cavity 1a, the discharge cavity 1b is arranged around an outer peripheral side of the accommodating cavity 1a, and the discharge cavity 1b is in communication with the accommodating cavity 1a via a communication hole 1c. The battery module 2 includes a housing 21 and a plurality of pouch battery cells 22 accommodated in the housing 21, the housing 21 is provided with a weak part 210, and the weak part 210 is configured to release the internal pressure of the pouch battery cells 22. Illustratively, the plurality of pouch battery cells 22 of the battery module 2 may be arranged sequentially in the first direction.

As can be seen, the arrangement of the weak part 210 can achieve the pressure relief of the pouch battery cell 22. For example, the weak part 210 is the position with the weakest strength on the housing 21. When the internal pressure of the pouch battery cell 22 reaches a threshold, the pressure exerted on the weak part 210 reaches its maximum tolerable level, causing the weak part 210 to be ruptured by the internal pressure of the pouch battery cell 22. A passage is thereby formed at the corresponding position of the weak part 210, establishing communication between the interior and exterior of the pouch battery cell 22. This passage allows the release of internal pressure of the pouch battery cell 22, and the above threshold varies based on different design requirements.

Then, during pressure relief of the pouch battery cell 22, the emissions are discharged into the accommodating cavity 1a, and since the accommodating cavity 1a is in communication with the discharge cavity 1b via the communication hole 1c, the emissions can be discharged into the discharge cavity 1b through the communication opening, thereby releasing the internal pressure of the pouch battery cell 22. To a certain extent, the temperature of the pouch battery cell 22 can also be reduced. Additionally, to a certain extent, the emissions entering the discharge cavity 1b can be separated from the pouch battery cell 22 in the accommodating cavity 1a, which slows down thermal propagation of the battery apparatus 100.

In addition, since the discharge cavity 1b is arranged around the outer peripheral side of the accommodating cavity 1a, the discharge cavity 1b does not occupy the internal space of the accommodating cavity 1a, and the discharge cavity 1b does not occupy the space allocated for the pouch battery cell 22 in the accommodating cavity 1a, such that the battery apparatus 100 can maintain a good energy density. Additionally, the above arrangement of the discharge cavity 1b and the accommodating cavity 1a results in a relatively simple relative positioning between the two, facilitating the processing of the case 1. Moreover, the specific structure of the discharge cavity 1b can be appropriately configured, such that the discharge cavity 1b can guide the flow of the emissions to a certain extent, thereby enabling the discharge of the emissions at an appropriate location.

Certainly, the case 1 defines the discharge cavity 1b, which not only enables the discharge of the emissions discharged during pressure relief of the pouch battery cell 22 but also facilitates the formation of a hollow structure in the part of the case 1 corresponding to the discharge cavity 1b. This configuration allows for a reduction in the material usage of the case 1 and the weight of the case 1 while maintaining the structural strength of the case 1, thereby contributing to an improvement in the energy density of the battery apparatus 100 to a certain extent.

Illustratively, the discharge cavity 1b is arranged around the outer peripheral side of the accommodating cavity 1a, and the outer peripheral side of the accommodating cavity 1a may include a plurality of sides. The discharge cavity 1b may be provided on one side of the plurality of sides of the accommodating cavity 1a, or the discharge cavity 1b may be provided on at least two sides of the plurality of sides of the accommodating cavity 1a. The discharge cavity 1b may extend linearly or along a curved path. For example, the discharge cavity 1b extends to form a closed annular shape (as shown in FIG. 5) or an open annular shape, such as an L-shape, U-shape, or C-shape. The term "open annular shape" refers to an annular shape with an opening, i.e., a non-closed annular shape. The term "annular shape" should be understood in a broad sense and is not limited to a "circular shape", and for example, it may also be "polygonal rings", and the like.

Referring to FIGs. 3 and 4, in some embodiments, the housing 21 has a U-shaped mounting cavity 21a, the U-shaped mounting cavity 21a has a first open side 21b and a closed side 21c disposed opposite to each other, and the closed side 21c is provided with the weak part 210; and/or the housing 21 has a U-shaped mounting cavity 21a, the U-shaped mounting cavity 21a has a second open side 21d and a third open side 21e disposed opposite to each other, the second open side 21d and the third open side 21e are each provided with the weak part 210, and tabs of the pouch battery cells 22 extend out of the housing 21 through the corresponding weak parts 210.

As can be seen, for the structure where the housing 21 defines the U-shaped mounting cavity 21a, the positioning of the weak part 210 is relatively flexible and an appropriate position can be selected based on different requirements to better meet practical applications. Additionally, appropriate weak structures can be selected based on different positions of the weak part 210, thereby ensuring good compatibility between the weak structure and its mounting position. It can be understood that when both the second open side 21d and third open side 21e are provided with the weak part 210, the weak part 210 may be formed as a relief opening or an opening 21f, which simplifies the structure of the weak part 210 and facilitates processing.

Illustratively, the weak part 210 is provided on the closed side 21c, and the weak part 210 may be a score or a weakened part; the weak part 210 is provided on the second open side 21d and the third open side 21e, and the weak part 210 may be a pressure relief hole.

In the example of FIG. 4, the housing 21 includes a first housing wall 211, a second housing wall 212, and a third housing wall 213, the first housing wall 211 and the third housing wall 213 are disposed opposite to each other in a width direction of the housing 21, and the second housing wall 212 is bent and connected between the first housing wall 211 and the third housing wall 213, such that the first housing wall 211, the second housing wall 212, and the third housing wall 213 define the U-shaped mounting cavity 21a; the second housing wall 212 is connected to one end of the first housing wall 211 and one end of the third housing wall 213 respectively in a height direction of the housing 21, such that the second housing wall 212 corresponds to the closed side 21c, the opening 21f of the housing 21 opposite to a second housing 21 corresponds to the first open side 21b, and two sides of the housing 21 in a length direction correspond to the second open side 21d and the third open side 21e, respectively. The width direction of the housing 21 may be the first direction, the height direction of the housing 21 may be the third direction, and the length direction of the housing 21 may be the second direction.

Certainly, in other embodiments, the U-shaped mounting cavity 21a may not have the second open side 21d and the third open side 21e. In this case, the two sides of the housing 21 corresponding to the second open side 21d and the third open side 21e are closed, for example, by a first housing part 214 described later.

In some embodiments, the weak part 210 is configured as a pressure relief hole; or, the weak part 210 is configured as a score; or, the weak part 210 is configured as a weakened part. In the above technical solution, more options may be provided for the specific structural design of the weak part 210 so as to meet different use requirements.

In some embodiments, when the volumetric energy density ρ of the pouch battery cell 22 is not less than 390 Wh/L, the aperture area S of the communication hole 1c is not less than 100 cm², and the number n of the communication holes 1c is not less than 8; when the volumetric energy density ρ of the pouch battery cell 22 is less than 390 Wh/L, the aperture area S of the communication hole 1c is less than 100 cm² but not less than 55 cm², and the number n of the communication holes 1c is less than 8 but not less than 4.

When the volumetric energy density ρ of the pouch battery cell 22 is not less than 390 Wh/L, the energy released and the heat generated when the pouch battery cell 22 undergoes thermal runaway are relatively high, the aperture area S of the communication hole 1c is not less than 100 cm², and the number n of the communication holes 1c is not less than 8, such that the emissions of the pouch battery cell 22 can be promptly discharged through the communication hole 1c, thereby reducing the impact on other pouch battery cells 22 in which thermal runaway does not occur, and slowing down thermal propagation; when the energy density ρ of the pouch battery cell 22 is less than 390 Wh/L, the energy released and the heat generated when the pouch battery cell 22 undergoes thermal runaway are relatively low, the aperture area S of the communication hole 1c is less than 100 cm² but not less than 55 cm², and the number n of the communication holes 1c is less than 8 but not less than 4, such that the emissions of the pouch battery cell 22 can be promptly discharged through the communication hole 1c, and the weakening of the case 1 is reduced.

As can be seen, in the above technical solution, the aperture area of the communication hole 1c and the number of the communication holes 1c may be configured based on the volumetric energy density of the pouch battery cell 22, ensuring that the aperture area of the communication hole 1c and the number of the communication holes 1c are well matched to the volumetric energy density of the pouch battery cell 22. This configuration allows the communication hole 1c to meet the pressure relief requirements of the pouch battery cell 22 while also maintaining the structural strength of the case 1, preventing excessive weakening of the case 1.

Optionally, in the above solution, the plurality of communication holes 1c may be spaced apart from each other in the extending direction of the discharge cavity 1b.

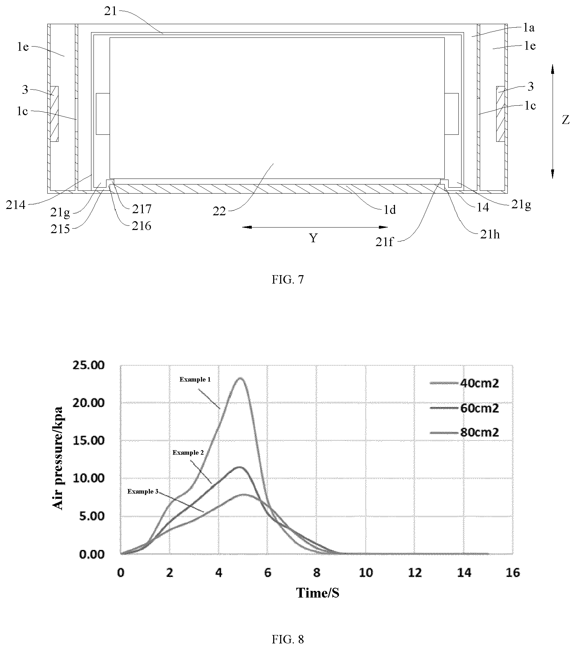

For example, as shown in FIG. 8, pressure relief tests are performed on three different examples. The three examples have the same number of the communication holes 1c, and the energy density ρ of the pouch battery cell 22 is also the same, i.e., 380 Wh/L. The difference among the three examples lies in the aperture area of the communication hole 1c. In Example 1, the aperture area of the communication hole 1c is 40 cm²; in Example 2, the aperture area of the communication hole 1c is 60 cm²; and in Example 3, the aperture area of the communication hole 1c is 80 cm². As can be seen from FIG. 8, during the entire pressure relief process, the peak internal pressure of the battery apparatus 100 of Example 1 exceeds 20 kPa. For Examples 2 and 3, the corresponding peak internal pressure does not exceed 20 kPa, and compared to Example 1, the battery apparatus 100 is less prone to significant bulging deformation, and the battery apparatus 100 is also less prone to air tightness issues caused by a high peak internal pressure during pressure relief. That is, Examples 2 and 3 are superior to Example 1. It can be understood that in pressure relief tests on the battery apparatus 100, if the peak internal pressure of the battery apparatus 100 exceeds 20 kPa, it indicates that the battery apparatus 100 is prone to significant bulging deformation and subsequent air tightness issues.

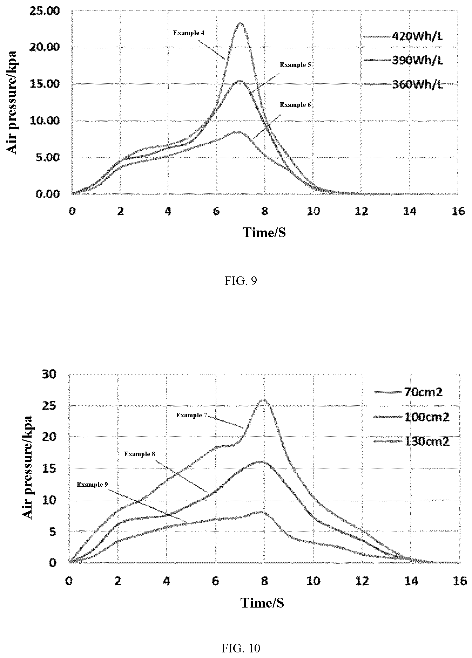

As shown in FIG. 9, pressure relief tests are performed on three different examples. The three examples have the same number of the communication holes 1c, and the aperture area of the communication holes 1c is also the same, i.e., 60 cm². The difference among the three examples lies in the energy density ρ of the pouch battery cell 22. In Example 4, the energy density ρ of the pouch battery cell 22 is 420 Wh/L; in Example 5, the energy density ρ of the pouch battery cell 22 is 390 Wh/L; and in Example 6, the energy density ρ of the pouch battery cell 22 is 360 Wh/L. As can be seen from FIG. 9, during the entire pressure relief process, the peak internal pressure of the battery apparatus 100 of Example 4 exceeds 20 kPa. For Examples 5 and 6, the corresponding peak internal pressure does not exceed 20 kPa, and compared to Example 4, the battery apparatus 100 is less prone to significant bulging deformation, and the battery apparatus 100 is also less prone to air tightness issues caused by a high peak internal pressure during pressure relief. That is, Examples 5 and 6 are superior to Example 4.

As shown in FIG. 10, pressure relief tests are performed on three different examples. The three examples have the same number of the communication holes 1c, and the energy density ρ of the pouch battery cell 22 is also the same, i.e., 450 Wh/L. The difference among the three examples lies in the aperture area of the communication hole 1c. In Example 7, the aperture area of the communication hole 1c is 70 cm²; in Example 8, the aperture area of the communication hole 1c is 100 cm²; and in Example 9, the aperture area of the communication hole 1c is 130 cm². As can be seen from FIG. 10, during the entire pressure relief process, the peak internal pressure of the battery apparatus 100 of Example 7 exceeds 20 kPa. For Examples 8 and 9, the corresponding peak internal pressure does not exceed 20 kPa, and compared to Example 7, the battery apparatus 100 is less prone to significant bulging deformation, and the battery apparatus 100 is also less prone to air tightness issues caused by a high peak internal pressure during pressure relief. That is, Examples 8 and 9 are superior to Example 7.

Referring to FIG. 5, in some embodiments, the battery apparatus 100 further includes a first protective member 3, the first protective member 3 is disposed in the discharge cavity 1b, the first protective member 3 is arranged opposite to the communication hole 1c, the first protective member 3 is spaced apart from the communication hole 1c, and the first protective member 3 has higher high-temperature resistance than the case 1.

As can be seen, the arrangement of the first protective member 3 does not obstruct the communication between the accommodating cavity 1a and the discharge cavity 1b via the communication hole 1c, such that the pressure relief of the pouch battery cell 22 remains unaffected. Furthermore, since the first protective member 3 is positioned opposite to the communication hole 1c and the first protective member 3 possesses excellent high-temperature resistance, at least a part of the emissions discharged from the accommodating cavity 1a into the discharge cavity 1b via the communication hole 1c will directly impact the first protective member 3. The first protective member 3 can separate the emissions, such as in the case of thermal failure of the pouch battery cell 22, high-temperature and high-pressure gases, and even gases and electrolytes with sparks and flames generated inside the pouch battery cell 22, from the inner wall of the discharge cavity 1b, thereby providing a protective effect. This configuration reduces potential damage to the case 1 caused by the impact from the high-temperature and high-pressure emissions, thus enhancing the structural strength and reliability of the case 1.

It can be understood that the first protective member 3 may be connected to the inner wall of the discharge cavity 1b.

Referring to FIG. 5, in some embodiments, a plurality of communication holes 1c are provided, the plurality of communication holes 1c are spaced apart from each other in a surrounding direction of the discharge cavity 1b, and each of the communication holes 1c corresponds to one respective first protective member 3.

As can be seen, the arrangement of the plurality of communication holes 1c is relatively dispersed, facilitating adaptability to the condition where the pouch battery cells 22 at different positions undergo thermal runaway. This configuration ensures that at least one of the plurality of communication holes 1c can provide an appropriate discharge path corresponding to the length of the pouch battery cell 22 undergoing thermal runaway, thereby balancing discharge smoothness and discharge resistance. Additionally, since each communication hole 1c corresponds to one respective first protective member 3, regardless of which communication hole 1c is used for discharging the emissions into the discharge cavity 1b, the respective first protective member 3 can protect the case 1, thereby improving the reliability of the case 1.

Illustratively, as shown in FIG. 5, the discharge cavity 1b includes a first discharge section 1e and a second discharge section 1f which are communicatively connected in a bent configuration, and the communication hole 1c is provided on the first discharge section 1e, such that the second discharge section 1f is in communication with the communication hole 1c via the first discharge section 1e; further, two first discharge sections 1e and two second discharge sections 1f are provided, the two first discharge sections 1e are arranged opposite to each other, the two second discharge sections 1f are arranged opposite to each other, each first discharge section 1e is in communication with two second discharge sections 1f, such that the entire discharge cavity 1b is formed in a closed annular shape, a plurality of communication holes 1c are formed on each first discharge section 1e and are spaced apart from each other in a length direction of the first discharge section, and the second discharge section 1f is not provided with the communication hole 1c.

Referring to FIG. 5, in some embodiments, on a preset plane, an orthographic projection of a wall of the communication hole 1c is located within an orthographic projection range of the first protective member 3, and the preset plane is perpendicular to an axial direction of the communication hole 1c.

As can be seen, on the preset plane, the coverage area of the first protective member 3 is greater than or equal to the aperture area of the communication hole 1c, such that the protective area of the first protective member 3 can be increased. This configuration facilitates directing at least the majority of the emissions ejected from the communication hole 1c directly towards the first protective member 3 rather than towards the inner wall of the discharge cavity 1b, thereby improving the protective effect of the first protective member 3 on the case 1 and further reducing the impact of the emissions on the case 1.

It can be understood that, in the embodiments of the present application, the opening shape of the communication hole 1c and the shape of the first protective member 3 may be the same or different, or on the preset plane, the shape of the orthographic projection of the wall of the communication hole 1c and the shape of the outer contour of the orthographic projection of the first protective member 3 may be the same or different.

Referring to FIG. 5, in some embodiments, on the preset plane, a minimum distance x between the orthographic projection of the wall of the communication hole 1c and the outer contour of the orthographic projection of the first protective member 3 is not less than 5 mm.

In the above technical solution, on the preset plane, by configuring the minimum distance x between the orthographic projection of the wall of the communication hole 1c and the outer contour of the orthographic projection of the first protective member 3 to be not less than 5 mm, the difference between the coverage area of the first protective member 3 and the aperture area of the communication hole 1c is further increased, and the protective area of the first protective member 3 is further increased. This configuration facilitates directing all the emissions ejected from the communication hole 1c directly towards the first protective member 3 rather than towards the inner wall of the discharge cavity 1b, thereby improving the protective effect on the case 1.

In some embodiments, the first protective member 3 is integrated into the case 1. For example, the first protective member 3 is integrally connected to the case 1, and in this case, the first protective member 3 may be flush with the inner wall of the discharge cavity 1b, or the first protective member 3 may also protrude from the inner wall of the discharge cavity 1b. Alternatively, the first protective member 3 is fixedly disposed on the inner wall of the discharge cavity 1b. For example, the first protective member 3 and the case 1 are separate components, and the first protective member 3 is connected to the inner wall of the discharge cavity 1b by an assembling connection means.

In the above technical solution, the arrangement of the first protective member 3 is flexible, allowing for different connection methods between the first protective member 3 and the case 1 based on various requirements, thereby better satisfying actual needs.

It can be understood that when the first protective member 3 is fixedly disposed on the inner wall of the discharge cavity 1b, the connection method between the first protective member 3 and the case 1 is not particularly limited. For example, the first protective member 3 is bonded to the inner wall of the discharge cavity 1b.

In some embodiments, the first protective member 3 includes a plurality of protective layers arranged sequentially in the axial direction of the communication hole 1c, the plurality of protective layers are made of different materials, and in any two adjacent protective layers, the protective layer proximal to the communication hole 1c has higher high-temperature resistance than the protective layer distal to the communication hole 1c.

As can be seen, in the two adjacent protective layers, the protective layer proximal to the communication hole 1c is positioned closer to the emissions and configured to primarily withstand high-temperature jet impact from the emissions. Therefore, in the solution described above, the high-temperature resistance of the protective layer proximal to the communication hole 1c is configured to be superior to that of the protective layer distal to the communication hole 1c. This configuration ensures reliable endurance against the high-temperature jet impact while appropriately reducing the high-temperature resistance requirements for the protective layer distal to the communication hole 1c, thereby contributing to an appropriate reduction in the material cost of the first protective member 3.

Certainly, the first protective member 3 may also be configured as a protective layer, such that the structure is simple and easy to process.

In some embodiments, the first protective member 3 is a ceramic composite member such as a TC composite tape, a mica member, a glass fiber member, or a high-temperature-resistant coating provided on the inner wall of the discharge cavity 1b.

As can be seen, these materials described above exhibit excellent high-temperature resistance, enabling them to withstand the impact of the emissions ejected from the communication hole 1c when the pouch battery cell 22 releases internal pressure. Additionally, these materials possess favorable processing properties, facilitating reliable placement within the discharge cavity 1b.

Referring to FIGs. 5 and 6, in some embodiments, the first protective member 3 is formed in a plate structure, and the first protective member 3 has a thickness t, where 0.3 mm ≤ t ≤ 3 mm.

In the above technical solution, by configuring the first protective member 3 as a plate structure, the structure of the first protective member 3 is simplified, thereby facilitating processing. Meanwhile, the reasonable thickness of the first protective member 3 ensures a balance between its reliability and protective effect on the case 1, while avoiding the occupation of excessive space within the discharge cavity 1b.

For example, the thickness t of the first protective member 3 is 0.3 mm, 0.5 mm, 0.8 mm, 1 mm, 1.5 mm, 2.2 mm, 2.7 mm, 3 mm, or the like.

Referring to FIG. 7, in some embodiments, two ends of the housing 21 in a first horizontal direction are each provided with the weak part 210, and a storage groove 21g is formed at the bottom of the housing corresponding to an end of the housing 21 where the weak part 210 is located, such that the two ends of the housing 21 in the first horizontal direction are each provided with the storage groove 21g. The notch of the storage groove 21g faces upward, and the bottom wall of the storage groove 21g is positioned lower than the pouch battery cell 22, that is, the bottom wall of the storage groove 21g is located below the pouch battery cell 22 in the up-down direction. For example, the first horizontal direction may be the second direction.

Therefore, when thermal runaway occurs in the pouch battery cell 22, the weak part 210 can intercept liquid, particles, and the like in the emissions, and the intercepted liquid, particles, and the like subsequently flow downward into the storage groove 21g for containment. The intercepted emissions in the housing 21 can be separated from the pouch battery cell 22, such that the emissions are not prone to contact the pouch battery cell 22 and then puncture the packaging of the pouch battery cell 22 packaging, resulting in insulation failure of the pouch battery cell 22. Therefore, the insulation reliability of the battery apparatus 100 during thermal runaway pressure relief is improved.

For example, as shown in FIG. 7, for a single storage groove 21g, the storage groove 21g may be arranged at intervals at one end of the pouch battery cell 22 in the first horizontal direction. The arrangement of the storage groove 21g is not particularly limited in the present application. For example, the end part of the housing 21 in the first horizontal direction may be bent multiple times to define the storage groove 21g with an upward-facing notch.

Optionally, the two ends of the housing 21 in the first horizontal direction may correspond to the second open side 21d and the third open side 21e described above, respectively, and the weak parts 210 at the two ends of the housing 21 in the first horizontal direction are not limited to being defined in the direction in which the housing 21 is opened.

Referring to FIG. 7, in some embodiments, the pouch battery cell 22 is positioned higher than the notch of the storage groove 21g.

In the above technical solution, since the pouch battery cell 22 is positioned higher than the notch of the storage groove 21g, the distance between the emissions in the storage groove 21g and the pouch battery cell 22 is increased. This configuration further enhances the capability of the storage groove 21g to separate the emissions therein and the pouch battery cell 22, reducing the possibility of contact between the emissions within the storage groove 21g and the pouch battery cell 22, thereby further improving the insulation reliability of the battery apparatus 100 during thermal runaway pressure relief.

Referring to FIG. 7, in some embodiments, the bottom of the housing 21 is provided with the opening 21f, the bottom of the accommodating cavity 1a is provided with a support protrusion 1d in a protruding manner, the support protrusion 1d is supported by the pouch battery cell 22 and the support protrusion 1d is fixed to the pouch battery cell 22 by adhesive bonding, the housing 21 is provided with an accommodating groove 21h having a downward-facing notch between any two storage grooves 21g, the opening 21f is formed on a top wall of the accommodating groove 21h, and at least a part of the support protrusion 1d is accommodated in the accommodating groove 21h and the support protrusion 1d abuts against the groove wall of the accommodating groove 21h.

Illustratively, the housing 21 may include a first housing part 214, a second housing part 215, and a third housing part 216 which are sequentially connected in a bent manner, the second housing part 215 may define the bottom wall of the storage groove 21g, the first housing part 214 and the third housing wall 213 respectively define side walls of the storage groove 21g, the third housing part 216 is disposed on a side of the first housing part 214 facing the pouch battery cell 22, an end of the third housing part 216 away from the first housing wall 211 is provided with a flange part 217, the flange part 217 participates in defining the top wall of the accommodating groove 21h, the third housing part 216 participates in defining the side walls of the accommodating groove 21h, the accommodating groove 21h is disposed between two flange parts 217 arranged opposite to each other in the first horizontal direction, and each flange part 217 abuts against the top of the support protrusion 1d; further, each third housing wall 213 abuts against the outer peripheral wall of the support protrusion 1d. As can be seen, the arrangement of the support protrusion 1d is conducive to raising the height position of the pouch battery cell 22 so as to increase the distance between the notch of the storage groove 21g and the pouch battery cell 22 in the up-down direction.

Optionally, an adhesive member between the support protrusion 1d and the pouch battery cell 22 may be provided at the opening 21f of the housing 21.

In the above technical solution, through the arrangement of the support protrusion 1d and the accommodating groove 21h, the groove wall of the storage groove 21g can fit the support protrusion 1d to achieve a supporting effect of the support protrusion 1d on the groove wall of the storage groove 21g. This configuration enhances the structural stability of the storage groove 21g. Meanwhile, the arrangement of the storage groove 21g enhances the structural strength of the bottom of the housing 21. In combination with the arrangement of the support protrusion 1d, the structural stability of the opening 21f is improved, thereby enhancing the stability of the battery module 2.

Referring to FIG. 5, in some embodiments, the battery apparatus 100 further includes a pressure relief structure 4. The pressure relief structure 4 is disposed on one side of the case 1 in a second horizontal direction, or the pressure relief structure 4 is disposed on the bottom side of the case 1. The pressure relief structure 4 is in corresponding communication with the discharge cavity 1b, and the pressure relief structure 4 is spaced apart from the communication hole 1c in the surrounding direction of the discharge cavity 1b. For example, the first horizontal direction may be the first direction.

Illustratively, when the internal pressure or temperature of the discharge cavity 1b reaches a predetermined threshold, the pressure relief structure 4 is actuated to release the internal pressure or reduce the internal temperature. When the internal pressure or temperature of the discharge cavity 1b reaches the predetermined threshold, the pressure relief structure 4 performs an action, or the weak structure provided in the pressure relief structure 4 is destroyed, thereby forming an opening or channel for releasing the internal pressure or reducing the internal temperature. The threshold is designed based on different design requirements.

In the above technical solution, by providing the pressure relief structure 4 in corresponding communication with the discharge cavity 1b, the internal pressure of the discharge cavity 1b can be released, allowing the emissions discharged during thermal runaway of the pouch battery cell 22 to be discharged from the battery apparatus 100 through the pressure relief structure 4, thereby slowing down thermal propagation. Moreover, since the pressure relief structure 4 is spaced apart from the communication hole 1c in the surrounding direction of the discharge cavity 1b, the emissions at the communication hole 1c have to flow through a certain path within the discharge cavity 1b before reaching the pressure relief structure 4. This configuration facilitates smooth discharge while maintaining a certain level of exhaust resistance, thereby mitigating the risk of fire caused by overly smooth discharge. In addition, the positioning of the pressure relief structure 4 is relatively flexible, thereby better satisfying actual differentiated needs.

In the embodiments of the present application, the second horizontal direction is parallel to or intersects with the first horizontal direction.

Referring to FIG. 5, in some embodiments, a distance y between the pressure relief structure 4 and the communication hole 1c in the surrounding direction of the discharge cavity 1b is not less than 10 cm. In other words, the emissions at the communication hole 1c at least flow through a path of 10 cm before reaching the pressure relief structure 4.

In the above technical solution, by configuring the distance y between the pressure relief structure 4 and the communication hole 1c in the surrounding direction of the discharge cavity 1b to be not less than 10 cm, the emissions at the communication hole 1c have to flow through a path of at least 10 cm within the discharge cavity 1b before reaching the pressure relief structure 4. This configuration facilitates smooth discharge while maintaining a certain level of exhaust resistance, further mitigating the risk of fire caused by overly smooth discharge.

It can be understood that when a plurality of pressure relief structures 4 are provided, the distance between each pressure relief structure 4 and any one of the communication holes 1c in the surrounding direction of the discharge cavity 1b is not less than 10 cm.

Referring to FIG. 5, in some embodiments, the discharge cavity 1b includes the first discharge section 1e and the second discharge section 1f which are communicatively connected in a bent configuration, the second discharge section 1f is in communication with the communication hole 1c via the first discharge section 1e, and the pressure relief structure 4 is disposed on the second discharge section 1f. Therefore, the emissions at the communication hole 1c can first flow to the first discharge section 1e, and then change direction and flow to the second discharge section 1f for discharging through the pressure relief structure 4.

In the above technical solution, the communication hole 1c is disposed on the first discharge section 1e, the pressure relief structure 4 is disposed on the second discharge section 1f, and the first discharge section 1e and the second discharge section 1f are communicatively connected in a bent configuration, such that the emissions at the communication hole 1c have to flow through a certain path within the discharge cavity 1b before reaching the pressure relief structure 4, and the emissions at the communication hole 1c have to change direction within the discharge cavity 1b before reaching the pressure relief structure 4. This configuration facilitates smooth discharge while maintaining a certain level of exhaust resistance, thereby mitigating the risk of fire caused by overly smooth discharge.

In some embodiments, when the volumetric energy density ρ of the pouch battery cell 22 is not less than 390 Wh/L, a plurality of pressure relief structures 4 are provided; when the volumetric energy density ρ of the pouch battery cell 22 is less than 390 Wh/L, one pressure relief structure 4 is provided.

When the volumetric energy density ρ of the pouch battery cell 22 is not less than 390 Wh/L, the energy released and the heat generated when the pouch battery cell 22 undergoes thermal runaway are relatively high, a plurality of pressure relief structures 4 are provided, and the discharge area may be properly increased, thereby facilitating promptly release of the internal pressure of the discharge cavity 1b; when the energy density ρ of the pouch battery cell 22 is less than 390 Wh/L, the energy released and the heat generated when the pouch battery cell 22 undergoes thermal runaway are relatively low, and one pressure relief structure 4 is provided, such that the emissions of the pouch battery cell 22 can be promptly discharged through the pressure relief structure 4, and the number of the pressure relief structure 4 is reduced, thereby simplifying the structure of the battery apparatus 100.

As can be seen, in the above technical solution, the number of the pressure relief structure 4 may be configured based on the volumetric energy density of the pouch battery cell 22, ensuring that the number of the pressure relief structure 4 is well matched to the volumetric energy density of the pouch battery cell 22. This configuration allows the communication hole 1c to meet the pressure relief requirements of the pouch battery cell 22 while also maintaining the structural strength of the case 1, preventing excessive weakening of the case 1.

Referring to FIGs. 3 to 6, in some embodiments, the case 1 includes a top plate 13, a bottom plate 14, and a frame 15, the frame 15 is arranged around the bottom plate 14, the frame 15 defines, with the top plate 13 and the bottom plate 14, the accommodating cavity 1a, the discharge cavity 1b is formed within the frame 15, and the communication hole 1c is formed on an inner peripheral wall of the frame 15.

It can be understood that the frame 15 is of a closed annular structure, and the inner peripheral wall of the frame 15 may participate in defining the peripheral wall of the accommodating cavity 1a, and may also participate in defining the peripheral wall of the discharge cavity 1b, such that the inner peripheral wall of the frame 15 can separate the accommodating cavity 1a from the discharge cavity 1b.

In the above technical solution, since the case 1 is configured to include the top plate 13, the bottom plate 14, and the frame 15, the frame 15, the top plate 13, and the bottom plate 14 define the accommodating cavity 1a, and the discharge cavity 1b is formed within the frame 15, the processing and molding of both the accommodating cavity 1a and the discharge cavity 1b are facilitated. This configuration allows the discharge cavity 1b to be arranged around the accommodating cavity 1a and facilitates the assembly of the case 1. It can be understood that the present application does not specifically limit the connection method between the frame 15 and the top plate 13 or between the frame 15 and the bottom plate 14.

Referring to FIGs. 3 and 5, in some embodiments, the frame 15 includes a plurality of edge beams 151 sequentially connected end to end, and at least a part of the plurality of edge beams 151 are each configured as a hollow structure to define the discharge cavity 1b, such that at least one of the plurality of edge beams 151 participates in defining the discharge cavity 1b.

In the above technical solution, since the frame 15 is configured to include the plurality of edge beams 151, the edge beam 151 participates in defining the discharge cavity 1b, the structure of the frame 15 is simplified, facilitating the processing and molding of the discharge cavity 1b. Meanwhile, the arrangement of the plurality of edge beams 151 allows for flexible configuration of the peripheral length of the discharge cavity 1b.

Illustratively, the frame 15 includes four edge beams 151 sequentially connected end to end, and each edge beam 151 is configured as a hollow structure, such that each edge beam 151 participates in defining a part of the discharge cavity 1b.

Referring to FIG. 5, in some embodiments, the discharge cavity 1b includes the first discharge section 1e and the second discharge section 1f which are communicatively connected in a bent configuration, the plurality of edge beams 151 include two first edge beams 1511 disposed opposite to each other in the first horizontal direction and two second edge beams 1512 disposed opposite to each other in a third horizontal direction, each of the first edge beams 1511 is configured as a hollow structure to define the first discharge section 1e, each of the second edge beams 1512 is configured as a hollow structure to define the second discharge section 1f, and the plurality of communication holes 1c are formed on an inner wall of each of the first edge beams 1511.

As can be seen, the first discharge section 1e and the second discharge section 1f are communicatively connected in a bent configuration, and the second discharge section 1f can be in communication with the communication hole 1c via the first discharge section 1e. This configuration ensures smooth discharge of the emissions while providing a certain degree of discharge resistance appropriately, thereby mitigating the risk of fire caused by overly smooth discharge. Additionally, the structure of the frame 15 is simple and easy to process.

It can be understood that the present application does not specifically limit the opening shape of the communication hole 1c. For example, the communication hole 1c may be a circular hole, a polygonal hole, an elliptical hole, or the like.

In some embodiments, the top of the housing 21 is provided with the pressure relief structure 4, and the battery apparatus 100 further includes a second protective member disposed between the top plate 13 and the battery module 2 to separate the pressure relief structure 4 from the top plate 13.

In the above technical solution, the arrangement of the second protective member does not affect the normal pressure relief function of the pressure relief structure 4, and at least a part of the emissions discharged toward the pressure relief structure 4 directly impact the second protective member. The second protective member can separate the emissions from the pressure relief structure 4 to provide a protective effect, such that potential damage to the pressure relief structure 4 caused by the impact from the high-temperature and high-pressure emissions is reduced, thereby improving the reliability of pressure relief and enhancing the reliability of the battery apparatus 100. In addition, if the battery apparatus 100 is used in a vehicle, and if the battery apparatus 100 is disposed at the bottom of the vehicle, the arrangement of the second protective member can better isolate the ejected emissions from the occupant, thereby improving ride performance.

In some embodiments, the battery module 2 includes a plurality of battery modules, the battery apparatus 100 further includes at least one of a first heat exchange member and a second heat exchange member, and the at least one of the first heat exchange member and the second heat exchange member described above is configured for heat exchange with the pouch battery cell 22. The first heat exchange member is disposed between two adjacent modules of the battery module 2, and the second heat exchange member is disposed between the battery module 2 and the case 1.

As can be seen, the first heat exchange member is disposed between two adjacent modules of the battery module 2, and for example, the first heat exchange member is disposed between the housings 21 of the two adjacent modules of the battery module 2, such that the first heat exchange member can exchange heat with the two adjacent modules of the battery module 2, and the working temperature of a plurality of battery modules 2 can be maintained within a relatively suitable range. This configuration reduces the temperature difference between the battery modules 2 and improves the working stability of the battery apparatus 100. Additionally, since the first heat exchange member is disposed between two adjacent modules of battery module 2, the space inside the battery apparatus 100 is fully utilized, and the space utilization rate is improved, thereby facilitating the miniaturization design of the battery apparatus 100. Since the second heat exchange member is disposed between the battery module 2 and the case 1, the temperature of the pouch battery cell 22 can also be maintained in a suitable range, and the reliability of the battery apparatus 100 is improved. The heat transfer through the second heat exchange member can further enhance the thermal management capability of the battery apparatus 100, and maintain the internal temperature of the battery apparatus 100 within a reasonable range during operation, thereby improving the operating efficiency and stability of the battery apparatus 100.

For example, the second heat exchange member may be disposed between the top plate 13 of the case 1 and the battery module 2, and/or the second heat exchange member may be disposed between the bottom plate 14 of the case 1 and the battery module 2, and/or the second heat exchange member may be disposed between at least one edge beam 151 of the frame 15 of the case 1 and the battery module 2.

In some embodiments of the present application, the pouch battery cell 22 is the ternary battery cell, the housing 21 of the battery module 2 wraps the plurality of pouch battery cells 22 around three peripheral sides of the plurality of pouch battery cells 22 of the battery module 2, and a housing wall of the housing 21, positioned opposite to the open end of the housing, is provided with the weak part 210.

In the above technical solution, the weak part 210 can guide directional pressure relief of the discharged gas when thermal runaway expansion and gas venting occur in the ternary battery cell. This reduces the risk of uncontrolled gas flow affecting the surrounding ternary battery cells, thereby lowering the risk of severe thermal runaway in the battery module 2 composed of ternary battery cells. Consequently, it contributes to the thermal runaway management of the battery module 2 and enhances the reliability of the battery module 2 composed of ternary battery cells.

In some embodiments of the present application, the pouch battery cell 22 is any one of a lithium iron phosphate battery cell, a ternary battery cell, and a solid-state battery cell. The solid-state battery cell may be, but is not limited to, a polymer solid-state battery cell, an oxide solid-state battery cell, a sulfide solid-state battery cell, a halide solid-state battery cell, or the like. The solid-state battery cell may also be a semi-solid-state battery cell or an all-solid-state battery cell.

In the above technical solution, when the aforementioned types of batteries are used as the pouch battery cell 22, more options may be provided for the design of the battery apparatus 100 so as to meet different use requirements. Specifically, when the pouch battery cell 22 is the lithium iron phosphate battery cell, it offers advantages of high reliability, long cycle life, light weight, high capacity, and low internal resistance. When the pouch battery cell 22 is the ternary battery cell, it offers advantages of high energy density and excellent electrochemical performance. When the pouch battery cell 22 is the solid-state battery cell, it offers advantages of high energy density, high reliability, light weight, and good performance at both high and low temperatures.

In some embodiments of the present application, the pouch battery cell 22 is the lithium iron phosphate battery cell, and in a positive electrode material of the pouch battery cell 22, an amount ratio of a positive electrode active material, a binder, and a conductive agent is 96:(1-3):(1-3); the pouch battery cell 22 is the ternary battery cell, and in a positive electrode material of the pouch battery cell 22, an amount ratio of a positive electrode active material, a binder, and a conductive agent is 96:(2-3):(1-2).

In the above technical solution, when the pouch battery cell 22 is the lithium iron phosphate battery cell, the high proportion of positive electrode active material means that a greater amount of electrochemically reactive material can be accommodated within the limited electrode assembly, thereby increasing the capacity and energy density of the battery apparatus 100. Therefore, the lithium iron phosphate battery cell can output a higher amount of electricity while maintaining relatively small volume and weight, making it suitable for application scenarios requiring a certain level of energy density. When the amounts of the binder and the conductive agent are within the aforementioned ranges, the cost of auxiliary materials can be reduced, thereby lowering the overall cost of the battery apparatus 100. When the pouch battery cell 22 is the ternary battery cell, due to relatively complex structure and surface properties of the ternary material, the adoption of the aforementioned ratio of the positive electrode active material, the binder, and the conductive agent ensures the firm bonding between the positive electrode active material particles and between the active material and the current collector. Therefore, this configuration improves the mechanical stability and structural integrity of the electrode assembly, and reduces the risk of active material detachment and electrode pulverization during the charging and discharging processes, thereby extending the cycle life of the battery apparatus 100.

In some embodiments, the positive electrode of the pouch battery cell 22 may be a positive electrode plate, the positive electrode plate may include a positive electrode current collector and a positive electrode film layer disposed on at least one surface of the positive electrode current collector, and the positive electrode film layer includes a positive electrode active material.

As an example, the positive electrode current collector has two surfaces opposite to each other in its own thickness direction, and the positive electrode film layer is disposed on any one or both of the two opposite surfaces of the positive electrode current collector.

As an example, the positive electrode current collector may be made of metal foil or composite current collector. For example, for the metal foil, stainless steel, copper, aluminum, nickel, carbon electrode, carbon, nickel, titanium, aluminum or stainless steel treated with silver on the surface, or the like may be used. The composite current collector may include a polymer material substrate and a metal layer. The composite current collector can be fabricated by forming a metal material (aluminum, aluminum alloy, nickel, nickel alloy, titanium, titanium alloy, silver and silver alloy, etc.) on a polymer material substrate (such as a substrate made of polypropylene, polyethylene terephthalate, polybutylene terephthalate, polystyrene, and polyethylene).

As an example, when the pouch battery cell 22 according to the embodiments of the present application is a lithium-ion battery, the positive electrode active material may include at least one of the following materials: a phosphate, a layered transition metal oxide, and their respective modified compounds. Optionally, the positive electrode active material may include layered transition metal oxides and their respective modified compounds, which is conducive to increasing the energy density of the pouch battery cell 22. However, the present application is not limited to these materials, and other traditional materials that can be used as positive electrode film layers for batteries may also be used. These positive electrode active materials may be used alone or in combination of two or more.

Examples of the phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

The layered transition metal oxide includes at least one of a compound with the general formula of LiₐNi_{b}Co_{c}M_{d}OₑA_{f} and a modified compound thereof, where 0.8 ≤ a ≤ 1.2, 0.3 ≤ b < 1, 0 < c < 1, 0 < d < 1, 1 ≤ e ≤ 2, 0 ≤ f ≤ 1, M includes at least one of Mn, Al, Zr, Zn, Cu, Cr, Mg, Fe, V, Ti, and B, and A includes at least one of N, F, S, and Cl. Optionally, 0.5 ≤ b < 1, and further optionally, 0.75 ≤ b ≤ 0.98.

Examples of the layered transition metal oxide may include, but are not limited to, at least one of a lithium cobalt oxide (such as LiCoO₂), a lithium nickel oxide (such as LiNiO₂), a lithium manganese oxide (such as LiMnO₂ and LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁), and LiNi_{0.9}Co_{0.05}Mn_{0.05}O₂ (also referred to as Ni90)), a lithium nickel cobalt aluminum oxide (such as LiNi_{0.80}Co_{0.15}Al_{0.05}O₂), and modified compounds thereof.

When the pouch battery cell 22 of the embodiments of the present application is a sodium-ion battery, the positive electrode active material may include, but is not limited to, at least one of a sodium-containing transition metal oxide, a polyanionic material (such as phosphate, fluorophosphate, pyrophosphate, and sulfate), and a Prussian blue material.

As an example, the positive electrode active material for use in the sodium-ion battery may include at least one of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, a Prussian blue material, and a material with the general formula XₚM'_{q}(PO₄)ᵣOₓY₃₋ₓ. In the general formula XₚM'_{q}(PO₄)ᵣOₓY₃₋ₓ, 0 < p ≤ 4, 0 < q ≤ 2, 1 ≤ r ≤ 3, 0 ≤ x ≤ 2, where X includes at least one of H+, Li+, Na+, K+, and NH4+; M' is a transition metal cation, optionally at least one of V, Ti, Mn, Fe, Co, Ni, Cu, and Zn; and Y is a halogen anion, optionally at least one of F, Cl, and Br.

In the embodiments of the present application, the modified compounds of the above positive electrode active materials may be obtained by doping modification and/or surface-coating modification of the positive electrode active materials, such as carbon-coating modification, fast-ionic conductor coating modification, and the like.

The pouch battery cell 22, during the charging and discharging processes, undergoes deintercalation and consumption of active ions such as Li, and the molar content of Li varies when the pouch battery cell 22 is discharged to different states. In the examples of the positive electrode active material listed in the embodiments of the present application, the molar content of Li is in an initial state of the material, that is, a state before the material is added, and when the positive electrode active material is applied to a battery system, the molar content of Li may change after charge-discharge cycles.

In the examples of the positive electrode active material listed in the embodiments of the present application, the molar content of oxygen O is only a theoretical value. The molar content of oxygen O will vary due to oxygen release from the crystal lattice, and actually, the molar content of oxygen O will fluctuate.

In the embodiments of the present application, the content of the element in the positive electrode active material has the meaning known in the art and can be detected by using devices and methods known in the art. For example, with reference to EPA 6010D-2014, inductively coupled plasma atomic emission spectrometry is used to determine the content using a plasma atomic emission spectrometer (ICP-OES, model: Thermo ICAP7400). First, 0.4 g of positive electrode active material is taken and weighed out, and 10 mL (50% concentration) of aqua regia is added thereto. Then, the mixture is placed on a flat plate at 180 °C for 30 min. After digestion on the flat plate, the mixture is adjusted to a volume of 100 mL and undergoes a quantitative test using a standard curve method.

In some embodiments, the positive electrode may be made of a foam metal. The foam metal may be foam nickel, foam copper, foam aluminum, foam alloy, foam carbon, or the like. When the foam metal is used as the positive electrode, the surface of the foam metal may be not provided with the positive electrode film layer. Certainly, the positive electrode film layer may also be provided. As an example, a lithium source material, a potassium metal, or sodium metal may also be incorporated into or/and deposited in the foam metal; the lithium source material is a lithium metal and/or a lithium-rich material.

In some embodiments, the positive electrode film layer further optionally includes a positive electrode conductive agent. The embodiments of the present application do not particularly limit the type of the positive electrode conductive agent. As an example, the positive electrode conductive agent includes at least one of superconducting carbon, conductive graphite, acetylene black, carbon black, Ketjen black, a carbon dot, a carbon nanotube, graphene, and a carbon nanofiber. In some embodiments, the mass percentage content of the positive electrode conductive agent in the positive electrode film layer is ≤ 5 wt%.

In some embodiments, the positive electrode film layer further optionally includes a positive electrode binder. The embodiments of the present application do not particularly limit the type of the positive electrode binder. As an example, the positive electrode binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin. In some embodiments, the mass percentage content of the positive electrode binder in the positive electrode film layer is ≤ 5 wt%.

The positive electrode film layer is generally formed by coating a positive electrode current collector with a positive electrode slurry, drying, and cold pressing. The positive electrode slurry is generally formed by dispersing the positive electrode active material, an optional conductive agent, an optional binder, and any other components in a solvent and stirring them uniformly. The solvent may be N-methylpyrrolidone (NMP), but is not limited thereto.

In some embodiments, the negative electrode may be a negative electrode plate. The negative electrode plate may include a negative electrode current collector and a negative electrode film layer disposed on at least one surface of the negative electrode current collector, and the negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

As an example, the negative electrode current collector may be made of metal foil, foam metal, or composite current collector. For example, for the metal foil, aluminum or stainless steel treated with silver on the surface, stainless steel, copper, aluminum, nickel, carbon electrode, carbon, nickel, titanium, or the like may be used. The foam metal may be foam nickel, foam copper, foam aluminum, foam alloy, foam carbon, or the like. The composite current collector may include a polymer material substrate and a metal layer. The composite current collector can be fabricated by forming a metal material (copper, copper alloy, nickel, nickel alloy, titanium, titanium alloy, silver and silver alloy, etc.) on a polymer material substrate (such as a substrate made of polypropylene, polyethylene terephthalate, polybutylene terephthalate, polystyrene, and polyethylene).

As an example, a negative electrode active material for use in the pouch battery cell 22 known in the art may be used as the negative electrode active material. As an example, the negative electrode active material may include at least one of the following materials: a carbon material (e.g., at least one of artificial graphite, natural graphite, soft carbon, and hard carbon), a silicon-based material, a tin-based material, a lithium titanate, and the like. The silicon-based material may include at least one of elemental silicon, a silicon-oxygen compound, a silicon-carbon composite, a silicon-nitrogen composite, and a silicon alloy. The tin-based material may include at least one of elemental tin, a tin-oxygen compound, and a tin alloy. However, the present application is not limited to these materials, and other traditional materials that can be used as negative electrode film layers for batteries may also be used. These negative electrode film layers may be used alone or in combination of two or more.

In some embodiments, the negative electrode active material includes silicon element. The silicon element may be present in the form of a silicon-based material. For example, the silicon-based material may include at least one of elemental silicon, a silicon-oxygen compound, a silicon-carbon composite, a silicon-nitrogen composite, and a silicon alloy. Due to the introduction of the silicon element, the energy density of the pouch battery cell 22 can be improved.

In some embodiments, the mass content of the silicon element in the negative electrode film layer is 1 wt% to 32 wt%, optionally 2 wt% to 19 wt%, and further optionally 6 wt% to 13 wt%. Under the system of the pouch battery cell 22, when the mass content of the silicon element is within the above range, the energy density of the pouch battery cell 22 can be improved.

In the embodiments of the present application, the mass content of the silicon element in the negative electrode film layer has the meaning known in the art and can be detected by using devices and methods known in the art. For example, by soaking the negative electrode plate in a solvent such as water to separate the negative electrode active material from the negative electrode current collector, performing suction filtration to obtain the negative electrode active material, using the inductively coupled plasma optical emission spectrometer, with the model ICAP7400, of Thermo Fisher Scientific Inc., USA, to conduct detection on the negative electrode active material, and referring to the GB/T30902-2014 standard, the mass content of the silicon element can be obtained.

In some embodiments, the negative electrode film layer further optionally includes a negative electrode conductive agent. The embodiments of the present application do not particularly limit the type of the negative electrode conductive agent. As an example, the negative electrode conductive agent may include at least one of superconducting carbon, conductive graphite, acetylene black, carbon black, Ketjen black, a carbon dot, a carbon nanotube, graphene, and a carbon nanofiber. In some embodiments, the mass percentage content of the negative electrode conductive agent in the negative electrode film layer is ≤ 5 wt%.

In some embodiments, the negative electrode film layer further optionally includes a negative electrode binder. The embodiments of the present application do not particularly limit the type of the negative electrode binder. As an example, the negative electrode binder may include at least one of styrene-butadiene rubber (SBR), water-soluble unsaturated resin SR-1B, aqueous acrylic resin (e.g., polyacrylic acid PAA, polymethacrylic acid PMAA, or sodium polyacrylate PAAS), polyacrylamide (PAM), polyvinyl alcohol (PVA), sodium alginate (SA), and carboxymethyl chitosan (CMCS). In some embodiments, the mass percentage content of the negative electrode binder in the negative electrode film layer is ≤ 5%.

In some embodiments, the negative electrode film layer further optionally includes other auxiliary agents. As an example, other auxiliary agents may include thickeners, such as sodium carboxymethylcellulose (CMC-Na) and PTC thermistor materials. In some embodiments, the mass percentage content of other auxiliary agents in the negative electrode film layer is ≤ 2 wt%.

In some embodiments, the material of the positive electrode current collector may be aluminum, and the material of the negative electrode current collector may be copper.

In some embodiments, the separator includes a separation film. The present application does not particularly limit the type of the separation film, and any porous-structure separation film known to have good chemical stability and mechanical stability may be selected and used.

The embodiments of the present application do not particularly limit the type of the separation film, and any porous-structure separation film known to have good chemical stability and mechanical stability may be selected and used.

In some embodiments, the material of the separation film may include one or more of glass fiber, non-woven fabric, polyethylene, polypropylene, and polyvinylidene fluoride. The separation film may be a single-layer film or a multi-layer composite film, and there is no particular limitation on this. When the separation film is a multi-layer composite film, the materials of the layers may be the same or different, and there is no particular limitation on this.

In some embodiments, the separation film may include a porous base film and a coating disposed on at least one side of the porous base film, and the coating may include at least one of inorganic particles or organic particles. The porous base film may include one or more of polyethylene and polypropylene.

The inorganic particles have relatively good heat resistance, and can improve the overall heat resistance of the separation film. When within the operating voltage range of the sodium-ion battery, the inorganic particles basically do not undergo oxidation reactions and reduction reactions with metal dendrites. In other words, the inorganic particles are configured to not undergo oxidation reaction and reduction reaction with the alkali metal and/or alkaline earth metal at a nominal voltage of the sodium-ion battery.

In some embodiments, the inorganic particles include one or more of boehmite γ-AlOOH, aluminum oxide Al₂O₃, aluminum hydroxide Al(OH)₃, barium sulfate BaSO₄, magnesium oxide MgO, magnesium hydroxide Mg(OH)₂, calcium oxide CaO, cerium oxide CeO₂, zirconium titanate SrTiO₃, barium titanate BaTiO₃, and magnesium fluoride MgF₂.

In some embodiments, the organic particles include at least one of polystyrene, polyethylene, polyimide, melamine resin, phenolic resin, polypropylene, polyester (e.g., polyethylene terephthalate, polyethylene naphthalate, and polybutylene terephthalate), polyphenylene sulfide, polyaramide, polyamide-imide, polyimide, a copolymer of butyl acrylate and ethyl methacrylate, and a mixture thereof.

In some embodiments, the pouch battery cell 22 further includes an electrolyte.

During the charging and discharging processes of the battery cell, active ions are intercalated and deintercalated back and forth between the positive electrode plate and the negative electrode plate, and the electrolyte serves to conduct the active ions between the positive electrode plate and the negative electrode plate. The embodiments of the present application do not particularly limit the type of the electrolyte, which can be selected based on actual needs. The electrolyte includes an electrolyte salt and a solvent. The types of the electrolyte salt and the solvent are not particularly limited, and can be selected based on actual needs.

In some embodiments, the electrolyte further optionally includes an additive. For example, the additive may include a negative electrode film-forming additive, or may include a positive electrode film-forming additive, or may include an additive capable of improving certain properties of the battery, such as an additive for improving the overcharge performance of the battery, an additive for improving the high-temperature performance of the battery, or an additive for improving the low-temperature power performance of the battery.

For example, the additive includes at least one of a cyclic carbonate compound containing unsaturated bonds, a sulfate ester compound, a sulfite ester compound, a sultone compound, a disulfonic acid compound, a nitrile compound, an aromatic compound, an isocyanate compound, a phosphazene compound, an acid anhydride, a cyclic acid anhydride compound, a phosphite ester compound, a phosphate ester compound, a borate ester, and a carboxylate ester compound.

It can be understood that when the pouch battery cell 22 is the lithium iron phosphate battery cell, in the positive electrode material of the pouch battery cell 22, the positive electrode active material accounts for 96 parts of the total weight of the positive electrode material, the binder accounts for 1 to 3 parts (for example, the part may include, but is not limited to, 1, 1.2, 1.5, 1.8, 2, 2.2, 2.5, 2.8, and 3 parts) of the total weight of the positive electrode material, and the conductive agent accounts for 1 to 3 parts (for example, the part may include, but is not limited to, 1, 1.2, 1.5, 1.8, 2, 2.2, 2.5, 2.8, and 3 parts) of the total weight of the positive electrode material.

Illustratively, when the pouch battery cell 22 is the lithium iron phosphate battery cell, the positive electrode active material is LFP (which may refer to LiFePO4, i.e., lithium iron phosphate), the binder may be PVDF (polyvinylidene fluoride), and the conductive agent may be conductive carbon black. The ratio of LFP:PVDF:conductive carbon black may be 96:2:2; that is, the total weight of the positive electrode active material is divided into 100 parts, in which LFP accounts for 96 parts, PVDF accounts for 2 parts, and the conductive carbon black accounts for 2 parts. The weight of the positive electrode active material may be measured in grams.

When the pouch battery cell 22 is the ternary battery cell, in the positive electrode material of the pouch battery cell 22, the positive electrode active material accounts for 96 parts of the total weight of the positive electrode material, the binder accounts for 2 to 3 parts (for example, the part may include, but is not limited to, 2, 2.2, 2.5, 2.8, and 3 parts) of the total weight of the positive electrode material, and the conductive agent accounts for 1 to 2 parts (for example, the part may include, but is not limited to, 1, 1.2, 1.5, 1.8, and 2 parts) of the total weight of the positive electrode material. The ternary battery cell may be, but is not limited to, lithium nickel cobalt manganese oxide-based materials, the lithium nickel cobalt aluminum oxide-based materials, or the like.

Illustratively, the ternary material of the ternary battery cell may be eight-series LiNi_{0.8}Co_{0.1}Mn_{0.1}O₂, and the ratio of the weight parts of the positive electrode active material, the binder, and the conductive agent is 96:2.5:1.5, that is, the total weight of the positive electrode material is divided into 100 parts, in which the eight-series LiNi_{0.8}Co_{0.1}Mn_{0.1}O₂ accounts for 96 parts, the binder accounts for 2.5 parts, and the conductive agent accounts for 1.5 parts.

In a second aspect, provided in the embodiments of the present application is an electric device 1000, which includes the battery apparatus 100 described above. The battery apparatus 100 is used for providing electrical energy.

In the above technical solution, since the battery apparatus 100 has relatively high reliability, the power utilization reliability of the electric device 1000 can be improved by adopting the battery apparatus 100.

It should be noted that the embodiments and features of the embodiments in the present application may be combined with each other without conflict.

The above are only preferred embodiments of the present application, and are not intended to limit the present application. For those skilled in the art, the present application can be modified and varied. Any modification, equivalent substitution, improvement, and the like made within the spirit and principle of the present application shall all fall within the protection scope of the present application.

## Claims

1. A battery apparatus, comprising:
a case having an accommodating cavity and a discharge cavity, wherein the discharge cavity is provided around an outer peripheral side of the accommodating cavity, and the discharge cavity is in communication with the accommodating cavity via a communication hole;
a battery module disposed within the accommodating cavity, the battery module comprising a housing and a plurality of pouch battery cells accommodated in the housing, wherein the housing has a weak part configured to release internal pressure of the pouch battery cells.

2. The battery apparatus according to claim 1, wherein the housing has a U-shaped mounting cavity,
the U-shaped mounting cavity has a first open side and a closed side disposed opposite to each other, and the closed side is provided with the weak part; and/or
the U-shaped mounting cavity has a second open side and a third open side disposed opposite to each other, the second open side and the third open side are each provided with the weak part, and tabs of the pouch battery cells extend out of the housing through the corresponding weak parts.

3. The battery apparatus according to claim 1 or 2, wherein the weak part is configured as a pressure relief hole; or, the weak part is configured as a score; or, the weak part is configured as a weakened part.

4. The battery apparatus according to any one of claims 1 to 3, wherein
when the volumetric energy density ρ of the pouch battery cell is not less than 390 Wh/L, the aperture area S of the communication hole is not less than 100 cm², and the number n of the communication holes is not less than 8;
when the volumetric energy density ρ of the pouch battery cell is less than 390 Wh/L, the aperture area S of the communication hole is less than 100 cm² but not less than 55 cm², and the number n of the communication holes is less than 8 but not less than 4.

5. The battery apparatus according to any one of claims 1 to 4, further comprising:
a first protective member disposed in the discharge cavity, wherein the first protective member is arranged opposite to and spaced apart from the communication hole, and the first protective member has higher high-temperature resistance than the case.

6. The battery apparatus according to claim 5, wherein a plurality of communication holes are provided and spaced apart from each other in a surrounding direction of the discharge cavity, and each of the communication holes corresponds to one respective first protective member.

7. The battery apparatus according to claim 5 or 6, wherein on a preset plane, an orthographic projection of a wall of the communication hole is located within an orthographic projection range of the first protective member, and the preset plane is perpendicular to an axial direction of the communication hole.

8. The battery apparatus according to claim 7, wherein on the preset plane, a minimum distance x between the orthographic projection of the wall of the communication hole and an outer contour of the orthographic projection of the first protective member is not less than 5 mm.

9. The battery apparatus according to any one of claims 5 to 8, wherein
the first protective member is integrated into the case; or
the first protective member is fixedly disposed on an inner wall of the discharge cavity.

10. The battery apparatus according to any one of claims 5 to 9, wherein the first protective member comprises a plurality of protective layers arranged sequentially in the axial direction of the communication hole, the plurality of protective layers are made of different materials, and in any two adjacent protective layers, the protective layer proximal to the communication hole has higher high-temperature resistance than the protective layer distal to the communication hole.

11. The battery apparatus according to any one of claims 5 to 10, wherein the first protective member is a ceramic composite member, a mica member, a glass fiber member, or a coating provided on the inner wall of the discharge cavity.

12. The battery apparatus according to any one of claims 5 to 11, wherein the first protective member is formed in a plate structure, and the first protective member has a thickness t, wherein 0.3 mm ≤ t ≤ 3 mm.

13. The battery apparatus according to any one of claims 1 to 12, wherein two ends of the housing in a first horizontal direction are each provided with the weak part, a storage groove is formed at the bottom of the housing corresponding to an end of the housing where the weak part is located, and a bottom wall of the storage groove is positioned lower than the pouch battery cell.

14. The battery apparatus according to claim 13, wherein the pouch battery cell is positioned higher than the notch of the storage groove.

15. The battery apparatus according to claim 13 or 14, wherein the bottom of the housing is provided with an opening, the bottom of the accommodating cavity is provided with a support protrusion in a protruding manner, the support protrusion is supported by the pouch battery cell and is fixed to the pouch battery cell by adhesive bonding, the housing is provided with an accommodating groove having a downward-facing notch between any two storage grooves, the opening is formed on a top wall of the accommodating groove, and at least a part of the support protrusion is accommodated in the accommodating groove and abuts against the groove wall of the accommodating groove.

16. The battery apparatus according to any one of claims 1 to 15, further comprising:
a pressure relief structure, disposed on one side of the case in a second horizontal direction or on the bottom side of the case, wherein the pressure relief structure is in corresponding communication with the discharge cavity, and the pressure relief structure is spaced apart from the communication hole in the surrounding direction of the discharge cavity.

17. The battery apparatus according to claim 16, wherein a distance y between the pressure relief structure and the communication hole in the surrounding direction of the discharge cavity is not less than 10 cm.

18. The battery apparatus according to claim 16 or 17, wherein the discharge cavity comprises a first discharge section and a second discharge section which are communicatively connected in a bent configuration, the second discharge section is in communication with the communication hole via the first discharge section, and the pressure relief structure is disposed on the second discharge section.

19. The battery apparatus according to any one of claims 16 to 18, wherein
in a case that the volumetric energy density ρ of the pouch battery cell is not less than 390 Wh/L, a plurality of pressure relief structures are provided;
in a case that the volumetric energy density ρ of the pouch battery cell is less than 390 Wh/L, one pressure relief structure is provided.

20. The battery apparatus according to any one of claims 1 to 19, wherein the case comprises a top plate, a bottom plate, and a frame, the frame is arranged around the bottom plate and defines, with the bottom plate and the top plate, the accommodating cavity, the discharge cavity is formed within the frame, and the communication hole is formed on an inner peripheral wall of the frame.

21. The battery apparatus according to claim 20, wherein the frame comprises a plurality of edge beams sequentially connected end to end, and at least a part of the plurality of edge beams are each configured as a hollow structure to define the discharge cavity.

22. The battery apparatus according to claim 21, wherein the discharge cavity comprises the first discharge section and the second discharge section which are communicatively connected in a bent configuration, the plurality of edge beams comprise two first edge beams disposed opposite to each other in the first horizontal direction and two second edge beams disposed opposite to each other in a third horizontal direction, each of the first edge beams is configured as a hollow structure to define the first discharge section, each of the second edge beams is configured as a hollow structure to define the second discharge section, and the plurality of communication holes are formed on an inner wall of each of the first edge beams.

23. The battery apparatus according to claim 22, wherein the top of the housing is provided with the pressure relief structure, and the battery apparatus further comprises:
a second protective member, disposed between the top plate and the battery module to separate the pressure relief structure from the top plate.

24. The battery apparatus according to any one of claims 20 to 23, wherein the battery module comprises a plurality of battery modules, the battery apparatus further comprises at least one of a first heat exchange member and a second heat exchange member, and the at least one of the first heat exchange member and the second heat exchange member is configured for heat exchange with the pouch battery cell,
the first heat exchange member being disposed between two adjacent modules of the battery module, and the second heat exchange member being disposed between the battery module and the case.

25. The battery apparatus according to any one of claims 1 to 24, wherein the pouch battery cell is any one of a lithium iron phosphate battery cell, a ternary battery cell, and a solid-state battery cell.

26. The battery apparatus according to claim 25, wherein the pouch battery cell is the lithium iron phosphate battery cell, and in a positive electrode material of the pouch battery cell, an amount ratio of a positive electrode active material, a binder, and a conductive agent is 96:(1-3):(1-3); the pouch battery cell is the ternary battery cell, and in a positive electrode material of the pouch battery cell, an amount ratio of a positive electrode active material, a binder, and a conductive agent is 96:(2-3):(1-2).

27. An electric device, comprising the battery apparatus according to any one of claims 1 to 26.
